(19) Europäisches Patentamt / European Patent Office / Office européen des brevets

(11) **EP 1 590 850 B1**

(12) **FASCICULE DE BREVET EUROPEEN**

(45) Date de publication et mention
de la délivrance du brevet:
**08.07.2015 Bulletin 2015/28**

(21) Numéro de dépôt: **03799657.6**

(22) Date de dépôt: **19.12.2003**

(51) Int Cl.:
*H01M 10/04* *(2006.01)*    *H01G 13/02* *(2006.01)*

(86) Numéro de dépôt international:
**PCT/FR2003/003828**

(87) Numéro de publication internationale:
**WO 2004/059777 (15.07.2004 Gazette 2004/29)**

(54) **DISPOSITIF DE COUPE DE FIN D ENROULEMENT D UN ELEMENT DE BATTERIE ENROULE LITHIUM-POLYMERE**

VORRICHTUNG ZUM ABTRENNEN DES AUFGEROLLTEN ENDES EINER GEWICKELTEN LITHIUM-POLYMERE-BATTERIE

DEVICE FOR CUTTING THE END OF A WINDING OF A WOUND LITHIUM POLYMER BATTERY ELEMENT

(84) Etats contractants désignés:
CH IT LI

(30) Priorité: **23.12.2002 FR 0216513**

(43) Date de publication de la demande:
**02.11.2005 Bulletin 2005/44**

(73) Titulaire: **Blue Solutions**
**29500 Ergué Gabéric (FR)**

(72) Inventeur: **LE GAL, Guy**
**F-29000 Quimper (FR)**

(74) Mandataire: **Regimbeau**
**20, rue de Chazelles**
**75847 Paris Cedex 17 (FR)**

(56) Documents cités:
**US-A- 3 432 901    US-A- 4 003 112**

## Description

La présente invention concerne le domaine des ensembles de stockage d'énergie électrique.

Plus précisément encore, la présente invention concerne en particulier les ensembles électrochimiques multi-couches à base de matériaux polymères comprenant un électrolyte encadré par deux électrodes formant respectivement cathode et anode.

L'invention s'applique notamment, mais non exclusivement, aux dispositifs comprenant une anode à base de lithium.

La présente invention s'applique à la réalisation de condensateurs, super-condensateurs et générateurs ou batteries.

Des exemples de tels ensembles électrochimiques pourront être trouvés dans les documents FR-A-2737339, FR-A-2759087, FR-A-2759211, FR-A-2808622.

On connaît les techniques de réalisations d'ensembles de stockage d'énergie électrique sous forme d'enroulements multi-couches.

Ces ensembles sont généralement réalisés à partir d'une pluralité de films mono-couche ou multi-couches, polymères ou non entraînés en défilement par une pluralité de rouleaux d'entrainement. Ces films sont rassemblés et superposés pour former un complexe. Le complexe ainsi obtenu est enroulé sur un mandrin circulaire de révolution. Lorsque le nombre de tours d'enroulement est suffisant, les couches doivent être coupées transversalement par des moyens de coupe. L'enroulement obtenu est ensuite libéré du mandrin.

La coupe finale de l'enroulement peut par exemple être réalisée manuellement à l'aide de ciseaux.

Toutefois, dans le cadre d'un dispositif automatisé de réalisation de tels enroulements, il est nécessaire d'utiliser des moyens de coupe automatisés et synchronisés avec le défilement du complexe.

A cet effet, on connaît des moyens de coupe de type « à appui » ou « à gorge ». Ces moyens comprennent généralement un outil tranchant et un élément complémentaire positionné en face l'un de l'autre, de part et d'autre du chemin de défilement du complexe. L'outil tranchant se présente sous la forme d'une lame ou d'une molette. La lame ou la molette vient trancher séquentiellement le complexe en appui contre une surface d'appui ou à l'intérieur d'une gorge. Dans les deux cas, le complexe est amené au contact soit de la surface d'appui, soit des deux bords de la gorge.

Un inconvénient de ces techniques de coupe est que dans le cadre de réalisation d'ensembles de stockage d'énergie, le contact du complexe avec l'élément complémentaire risque d'entraîner le collage de certaines couches formant le complexe sur l'élément complémentaire.

Ce contact génère en outre une pollution des faces externes du complexe par l'élément complémentaire et vice versa.

Le document EP 1 249 884 présente un dispositif de réalisation d'ensembles de stockage d'énergie électrique, comprenant des moyens d'entraînement d'un film complexe, des moyens d'enroulement, et des moyens de tensions de couches composant le film complexe. Il comprend en outre des moyens de coupe situés en amont des moyens d'enroulement, et un couple de rouleaux, entre les moyens de coupe et les moyens d'enroulement.

Le document US 4,003,112 divulgue quant à lui un dispositif de réalisation de condensateurs dans lequel un film complexe est enroulé autours d'un insert pour former un condensateur. Le film complexe est ensuite sectionné, et le condensateur retiré du moyen d'enroulement. Il comprend pour cela des moyens d'entraînement du film complexe, des moyens d'enroulement du film, et des moyens de coupe du film complexe aptes à être actionnés séquentiellement pour venir effectuer une coupe du film complexe.

Les inventeurs on constaté qu'il était particulièrement avantageux de rassembler les films mono-couche ou multi-couches formant le complexe en sandwich entre des pellicules de protection. Ces pellicules ont pour fonction d'éviter une pollution des faces externes du complexe par l'environnement extérieur et d'empêcher le collage des complexes sur les différents rouleaux impliqués. Ces pellicules participent en outre à l'entraînement du complexe.

Les pellicules protégeant les faces externes du film complexe doivent être retirées avant l'enroulement du complexe sur le mandrin. Lorsque ces pellicules sont retirées, elles le sont le plus loin possible sur la trajectoire du film, de sorte que le film ne passe jamais nu sur un rouleau lors de son parcours et qu'il soit toujours entraîné par les pellicules.

Ces pelliculès sont par conséquent retirées de préférence immédiatement en amont des moyens de coupe finaux.

Ceci exclut l'utilisation des moyens de coupe de type « à appui » ou « à gorge » précités dont l'élément complémentaire à surface d'appui ou à gorge présente un certain encombrement et est mal adapté dans le cadre d'une machine automatique de réalisation d'éléments de stockage d'énergie. En effet, cette machine doit être placée dans un environnement anhydre tel qu'une salle anhydre de faibles dimensions. Par conséquent, les éléments de cette machine doivent être les plus compacts possible pour un encombrement final minimal de la machine.

Un but de l'invention est donc de proposer un dispositif de coupe compact, compatible avec les contraintes de réalisation en automatique d'ensembles de stockage d'énergie sous forme d'enroulements.

Ce but est atteint dans le cadre de la présente invention grâce à un dispositif de réalisation d'ensembles de stockage d'énergie électrique, tel que defini en revendication 1 annexée.

Dans un tel dispositif, la coupe étant réalisée en l'air, le film ne se trouve en appui sur aucun élément. Ce dispositif permet donc d'exclure toute pollution du complexe.

Le fait que le film soit tendu lorsqu'il défile devant les moyens de coupe permet en outre de réaliser une coupe transversale précise.

De manière préférentielle, les moyens de coupe comprennent une lame comprenant un bord tranchant formé d'un dièdre convexe à deux pentes symétriques.

D'autres caractéristiques, buts et avantages de la présente invention apparaîtront à la lecture de fa description détaillée qui va suivre et en regard des dessins annexés donnés à titre d'exemples non limitatifs et sur lesquels :

- la figure 1 représente une vue générale schématique dés moyens principaux composant le dispositif conforme à la présente invention,
- la figure 2 représente une vue en bout partielle à échelle agrandie d'un mandrin d'enroulement conforme à un mode de réalisation préférentiel de la présente invention,
- la figure 3 représente une vue schématique des moyens d'enroulement conformes à la présente invention, composés de la combinaison d'un tel mandrin d'enroulement et d'un rouleau presseur associé,
- les figures 4, 5 et 6 représentent des vues similaires des moyens d'enroulement dans trois positions successives de leur cinématique,
- la figure 7 représente une vue partielle de moyens conformes à la présente invention situés en amont d'un ensemble de complexage,
- la figure 8 représente une vue partielle similaire de moyens conformes à la présente invention situés en aval de cet ensemble de complexage et en amont d'un module d'enroulement,
- les figures 9 à 16, qui seront décrites plus en détail par la suite, illustrent schématiquement, en coupe transversale, les structures multi-couches mises en oeuvre à différents stades de l'alimentation du dispositif conforme à la présente invention,
- les figures 17 à 20, qui seront également décrites plus en détail par la suite, représentent des vues en coupe transversale des trois structures multi-couches de base utilisées dans le cadre de l'invention et de la structure multi-couche résultante, avant pelliculage, destinée à l'alimentation du mandrin, les figures 17 à 20 illustrant plus précisément le positionnement relatif des bords latéraux longitudinaux des différentes couches impliquées,
- la figure 21 représente schématiquement un enroulement conforme à la présente invention (la figure 21 représente un nombre de spires inférieur à la réalité pour simplifier l'illustration),
- la figure 22 représente schématiquement des moyens d'entraînement d'un mandrin d'enroulement et d'un rouleau presseur associé, conformes à la présente invention,
- la figure 23 représente schématiquement des moyens de coupe localisée d'un collecteur de courant,
- la figure 24 représente schématiquement le collecteur de courant résultant comportant des coupes localisées,
- la figure 25 représente schématiquement un enroulement comportant de telles coupes,
- la figure 26 représente schématiquement le déploiement d'un collecteur de courant obtenu grâce à de telles coupes,
- la figure 27 représente les courbes d'évolution de vitesse du mandrin d'enroulement conforme à la présente invention et d'un rouleau presseur associé, à l'origine de l'enroulement, pour une rotation complète sur 360°, en fonction de leur position angulaire,
- la figure 28 représente des courbes similaires de variation de vitesse du mandrin et du rouleau presseur à la fin d'un enroulement, en fonction de leur position angulaire,
- la figure 29 représente la variation du rayon d'enroulement en fonction de l'angle du mandrin ainsi qu'une courbe de variation d'un facteur de correction en fonction de cet angle,
- la figure 30 représente un tableau qui illustre les données utilisées pour piloter l'évolution de la vitesse de rotation du mandrin d'enroulement,
- la figure 31 représente une vue schématique du bord tranchant d'une lame de coupe conforme à un mode de réalisation préférentiel de la présente invention,
- la figure 32 représente schématiquement un mode de réalisation préférentiel d'un dépelliculeur conforme à la présente invention, et
- la figure 33 représente un synoptique général du dispositif conforme à la présente invention,
- la figure 34 représente de manière schématique les moyens de coupe et les moyens d'actionnement associés.

Dans la suite de la description on utilisera les termes « amont » et « aval » en référence au sens de déplacement des complexes dans le dispositif, le terme « amont » qualifiant les éléments situés avant une référence donnée, tandis que le terme « aval » qualifie les éléments situés après celle-ci.

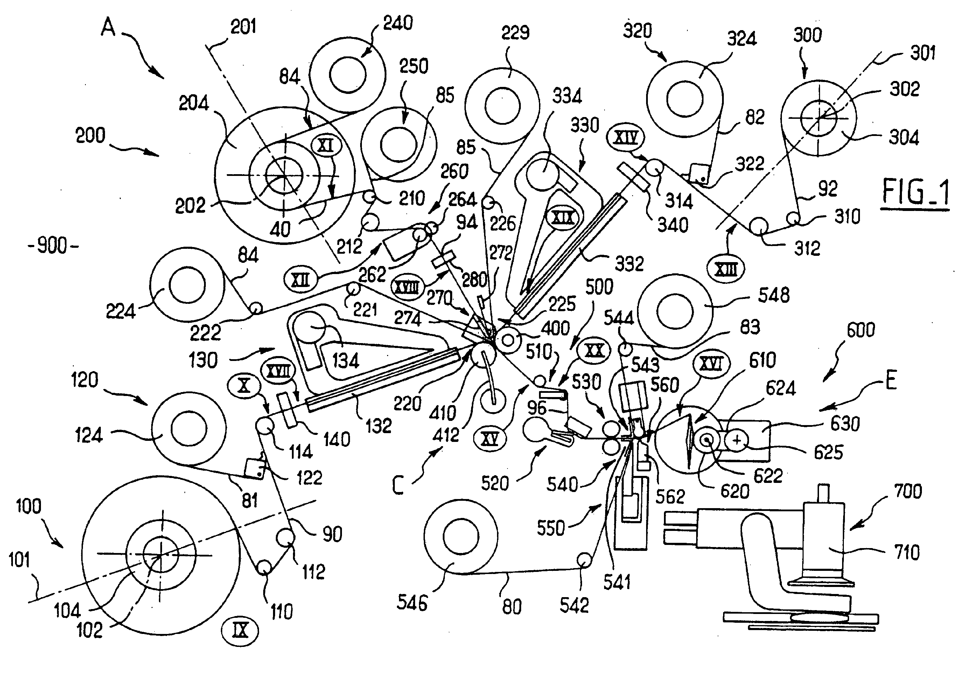

Le dispositif de réalisation d'ensembles de stockage d'énergie électrique conforme à la présente invention comprend essentiellement, comme illustré sur la figure 1 annexée :

- des moyens A d'alimentation en structures multi-couches, et
- des moyens E d'enroulement de ces structures.

Les moyens d'alimentation A ont pour fonction d'acheminer plusieurs ensembles mono-couches ou multi-couches 90, 92, 94, initialement séparés et de complexer, c'est-à-dire de superposer et de lier, ceux-ci. Les moyens d'alimentation A ont également pour fonction d'assurer un positionnement relatif précis des bords longitudinaux des différentes couches impliquées dans le complexe final 96.

Les différents éléments mono-couches ou multi-couches et les complexes résultant mis en oeuvre dans le cadre de la présente invention, sont déplacés parallèlement à un bâti 900 dont la fonction sera définie plus en détail par la suite.

Le mode de réalisation particulier du dispositif illustré sur la figure 1 annexée est destiné à la réalisation d'ensembles générateurs formés d'un empilement de six couches : un collecteur 10 (par exemple en aluminium), une cathode 20 (par exemple à base de POE (polyoxyéthylène) et de sel de lithium), une couche d'électrolyte 30, une anode 40, par exemple en lithium, une couche d'électrolyte 50 et une cathode 60. Les électrolytes 30 et 50 sont par exemple à base de LiV$_3$O$_8$ ou V$_2$O$_5$ et POE. Le collecteur en Al 10 est de préférence revêtu d'une barrière anticorrosion, par exemple à base de nitrure de Ti ou autre, graphite par exemple.

Cependant, l'invention n'est pas limitée à cet exemple particulier.

Dans ce contexte, les moyens d'alimentation A comprennent trois magasins d'alimentation séparés 100, 200 et 300.

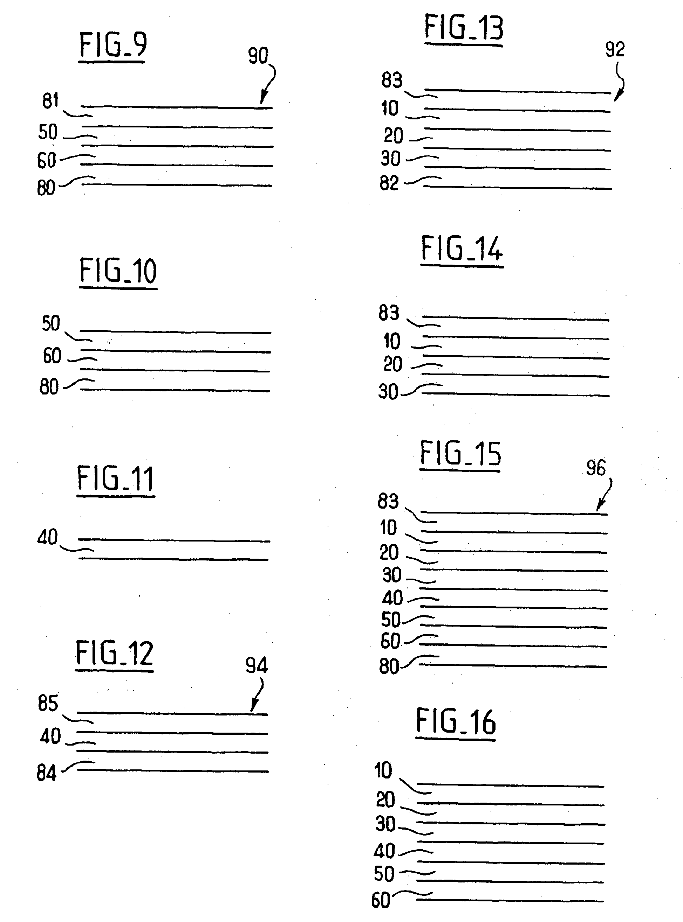

Le moyen d'alimentation 100 est destiné à l'alimentation d'un complexe 90 quatre couches comprenant la cathode 60 et la couche d'électrolyte 50 précitées placées en sandwich entre deux pellicules externes de protection 80, 81 (voir figure 9).

Le moyen d'alimentation 200 est destiné à l'alimentation de la feuille d'anode 40 (voir figure 11).

Le moyen d'alimentation 300 est destiné à l'alimentation d'un complexe 92 cinq couches comprenant : l'électrolyte 30, la cathode 20 et le collecteur 10 pris en sandwich entre deux pellicules externes de protection 82, 83 (voir figure 13).

De préférence, chacun de ces moyens d'alimentation 100, 200, 300 comprend une bobine du complexe souhaité, 90, 40 ou 92, préalablement réalisée par tout moyen approprié, placée à rotation sur le bâti commun 900 autour d'axes de rotation respectifs 102, 202, 302.

Bien entendu, les bobines formant les magasins d'alimentation 100, 200 et 300 sont montées de manière amovible sur le bâti 900 pour pouvoir être remplacées après épuisement.

Le complexage des trois ensembles 90, 40 et 92 issus respectivement des trois moyens d'alimentation 100, 200 et 300, c'est-à-dire l'empilage de ces ensembles, est réalisé dans un module de complexage C interposé entre la sortie des moyens d'alimentation 100, 200, 300, et les moyens d'enroulement E.

Sur la figure 1, les bobines des complexes 90, 40 et 92 placées dans les trois moyens d'alimentation 100, 200, 300, sont référencées respectivement 104, 204, 304.

Le complexe quatre couches 90 issu de la bobine 104 est guidé vers le module de complexage C par des rouleaux 110, 112, 114.

En aval de la sortie de bobine 104, le module 100 comprend un ensemble de dépelliculage 120 conçu pour retirer la pellicule 81 située côté face à complexer, sur l'électrolyte 50. Cet ensemble de dépelliculage 120 est positionné entre les rouleaux de renvoi 112 et 114.

La structure de complexe trois couches 50, 60, 80 obtenue en sortie de l'ensemble de dépelliculage 120 est illustrée sur la figure 10.

Par ailleurs, le moyen d'alimentation 100 comprend entre l'ensemble de dépelliculage 120 et le module de complexage C un module de chauffage 130. La structure et la fonction de celui-ci seront décrites plus en détail par la suite.

De manière similaire, le complexe cinq couches 92 issu de la bobine 304 est guidé vers le module de complexage C par des rouleaux 310, 312, 314.

En aval de la sortie de bobine 304, le module 300 comprend un ensemble de dépelliculage 320 conçu pour retirer la pellicule 82 située côté face à complexer, sur l'électrolyte 30. Cet ensemble de dépelliculage 320 est positionné entre les rouleaux de renvoi 312 et 314.

La structure de complexe quatre couches 83, 10, 20, 30 obtenue en sortie de l'ensemble de dépelliculage 320 est illustrée sur la figure 14.

Par ailleurs, le moyen d'alimentation 300 comprend entre l'ensemble de dépelliculage 320 et le module de complexage C un module de chauffage 330. La structure et la fonction de celui-ci seront décrites plus en détail par la suite.

L'ensemble d'alimentation 200 destiné à l'alimentation d'un film d'anode, de préférence à base de lithium, comprend deux rouleaux d'alimentation 240, 250, de pellicules respectives 84, 85.

Les pellicules 84, 85 et le film d'anode 40 sont guidés par des rouleaux 210, 212, vers un ensemble d'application primaire 260. Cet ensemble 260 a pour fonction de réunir sous forme d'un élément comprenant la couche d'anode 40 prise en sandwich entre les deux pellicules 84, 85, ces films initialement distincts provenant des bobines d'alimentation respectives 204, 240 et 250.

L'élément comprenant les deux pellicules 84 et 85 encadrant l'anode 40, est illustré sur la figure 12.

L'ensemble d'application 260 est formé de préférence de deux rouleaux pinceurs 262, 264 montés à rotation autour d'axes respectifs parallèles, recevant entre eux à défilement les trois films précités 84, 40, 85. De préférence, l'un 262 des rouleaux a son axe de rotation fixe dans l'espace, tandis que le second rouleau 264 placé en regard, qui sert de rouleau presseur, est sollicité à déplacement contre le rouleau 262 premier cité, sous un effort contrôlé, par exemple à l'aide de moyens élastiques, tels qu'une lame élastique 263.

Par ailleurs l'un au moins des deux rouleaux 262, 264 est motorisé. Il est contrôlé pour alternativement, entraîner par traction l'élément 84, 40, 85 , et freiner cet élément, en synchronisation avec le process aval. A ce titre les rouleaux 262, 264 sont asservis en esclave sur les moyens du processus aval.

Le cas échéant l'un au moins des rouleaux 262, 264 est monté sur un équipage escamotable, par exemple piloté par un vérin, pour permettre de séparer les deux rouleaux 262, 264 et faciliter ainsi la mise en place initiale de l'élément 84, 40, 85 entre ceux-ci.

En aval de l'ensemble d'application 260, le moyen d'alimentation 200 comprend un module 270 de sectionnement transversal de la couche d'anode 40.

A cette fin, le module de sectionnement 270 comprend un système de marteau 272 et d'enclume 274 disposés respectivement de part et d'autre du chemin de déplacement de l'élément 84, 40, 85. Le marteau 272 opère par frappe linéaire transversale au travers des pellicules de protection 84, 85.

L'un au moins du marteau 272 ou de l'enclume 274, de préférence le marteau 272, comprend une arête contondante.

Le marteau 272 est sollicité séquentiellement à la frappe contre l'enclume 274 pour délimiter dans le film initial 40 d'anode, une longueur avale correspondant à l'enroulement recherché. On notera que le marteau 272 opère sur l'élément comprenant l'anode 40 prise en sandwich entre les deux pellicules 84, 85. Cependant, les pellicules 84, 85 sont formées d'un matériau apte à résister à la frappe du marteau 272 pour éviter toute rupture des pellicules 84, 85.

Les deux pellicules 84, 85 sont retirées de l'élément précité illustré sur la figure 12, en sortie du module de sectionnement 270 par des moyens de dépelliculage 220, 225. Le cas échéant ces moyens de dépelliculage 220, 225 peuvent être formés par le marteau 272 et l'enclume 274 eux mêmes.

Le tronçon de l'anode 40 situé en avant de la ligne de rupture définie par le module 270 est entraîné par les moyens d'entraînement situés en aval, ce tronçon d'anode 40 étant lui-même pris en sandwich entre les deux ensembles 50, 60, 80, d'une part, et 83, 10, 20, 30, d'autre part, dans le module de complexage C.

Le tronçon du film d'anode 40 situé en amont de la ligne de rupture est quant à lui entraîné par les pellicules 84, 85, puisque celles-ci, comme indiqué précédemment, ne sont pas sectionnées dans le module 270.

On notera sur ce point que l'ensemble des pellicules 80, 81, 82, 83, 84 et 85, a non seulement pour fonction d'éviter une pollution des faces externes de complexe par l'environnement extérieur et d'empêcher le collage des complexes sur les différents rouleaux impliqués, mais de plus participe à l'entraînement de leur complexe associé.

Les pellicules 80, 81, 82, 83, 84 et 85 sont avantageusement à base de PP (polypropylène), PE (polyéthylène), PET (polyéthylène téréphtalate) ou analogue.

Lorsque celles-ci sont retirées, elles le sont le plus loin possible sur leur trajectoire, de sorte que le film associé ne passe jamais nu sur un rouleau de son parcours, afin d'éviter la pollution à la fois du film et du rouleau.

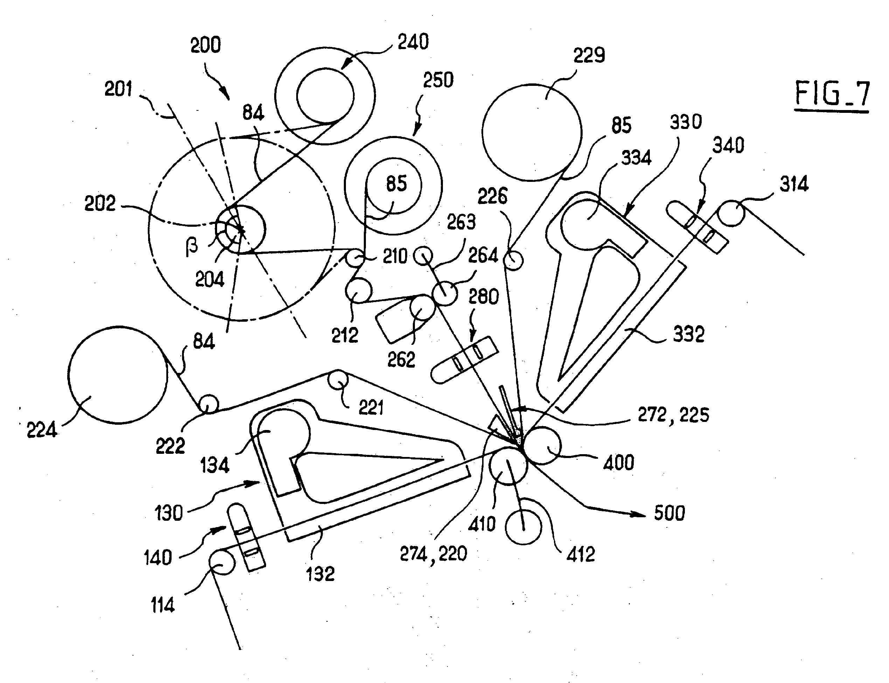

On notera par ailleurs que les deux dérouleurs de pellicule 240, 250 associés au dérouleur d'anode 204 sont sensiblement adjacents et que la pellicule 84 issue du dérouleur 240 entoure le rouleau d'anode 204 sur un arc d'enroulement (« embarrage » selon l'expression consacrée) important (typiquement supérieur à 90° et préférentiellement au moins égal à 270°) pour à la fois assurer une bonne protection de ce film fragile et garantir un entraînement mécanique adéquat. Cet arc d'enroulement de l'anode 204 par la pellicule 84 est référencé β sur la figure 7 annexée. Il varie en fonction du rayon de la spire externe de film présent sur le dérouleur 240.

La commande séquentielle d'une part, de l'entraînement des pellicules 84 et 85, et par conséquent du tronçon d'anode 40 situé en amont de la ligne de rupture, et d'autre part, de l'entraînement des pellicules 80 et 83 et par conséquent du tronçon d'anode situé en aval de cette ligne de rupture, est de préférence adaptée pour définir un intervalle, par exemple de l'ordre de 20mm entre les deux tronçons précités, après rupture. Plus précisément la frappe de l'outil 272 est synchronisée avec l'arrêt en frein des rouleaux pinceurs 262, 264 de façon à créer une interruption de défilement du lithium 40 pendant que le complexage continue en aval à la même vitesse.

On évite ainsi, grâce à la pré-rupture de la couche d'anode 40, d'avoir à couper en aval, simultanément, toutes les couches composant le complexe final, ce qui risquerait de pincer toutes les couches entre elles et pourrait entraîner des courts-circuits entre l'anode 40, les cathodes 20, 60 et le collecteur 10.

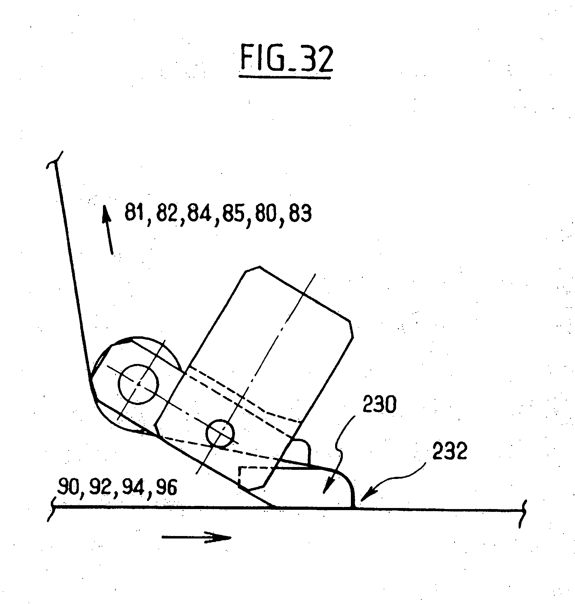

Pour éviter de détériorer l'interface adjacente aux pellicules, notamment par arrachement, lors du retrait de celles-ci, de préférence le dépelliculage, au niveau des postes 120, 220, 225 et 320 précités, est réalisé à l'aide d'un système racleur 230 schématisé sur la figure 32, disposé tangentiellement au film concerné et doté d'une arête polie 232 presque vive, adapté pour assurer un pelage de la pellicule grâce à une déviation brutale de celle-ci d'au moins 60° (voir figure 32), le cas échéant avec retournement sur elle-même de celle-ci sensiblement à 180°, selon un rayon de courbure faible (typiquement un rayon proche de 0,05m). Le racleur 230 est formé d'une lame statique à arête émoussée 232 proche du plan de déplacement, en amont, du film qui porte la pellicule. L'arête 232 à sa convexité dirigée vers l'aval du déplacement du film.. Les inventeurs ont en effet déterminé qu'un tel pelage permettait de préserver la surface du complexe adjacent alors qu'un arrachement de la pellicule sans précaution détériore généralement celle-ci. Le racleur précité 230 permet en effet un décollement de la pellicule par effet de cisaillement entre le film fonctionnel et la pellicule de protection. En tirant la pellicule de protection autour de l'arête 232 du racleur 230, on crée un allongement de la courbure extérieure de la couche de pellicule de protection, ce qui crée localement une force tangentielle sur la dite couche, un micro-étirage de la pellicule et un effet de glissement de la couche de pellicule sur le film fonctionnel, évitant ainsi l'arrachement de particules du produit fonctionnel.

De préférence, le dispositif comprend également des moyens de réglage de l'effort de traction exercé sur la pellicule de protection lorsque celle-ci est déviée sur l'arête émoussée 232 du racleur 230.

Sur la figure 1, le système racleur des ensembles de dépelliculage 120, 320, sont référencés 122, 322. Les pellicules 81, 82, 84 et 85, retirées sur les postes 120, 320, 220 et 225, sont dirigées vers des rouleaux respectifs 124, 324, 224 et 229. A cette fin, les pellicules 84 et 85, sont guidées par des rouleaux 221, 222, d'une part, et 226 d'autre part.

Les moyens de chauffage 130 et 330 ont pour fonction de porter à température contrôlée la surface externe d'interface des électrolytes 50 et 30 avant que ceux-ci ne soient portés au contact de la couche d'anode 40 dans l'ensemble de complexage C, pour permettre par la suite une bonne adhérence entre les couches d'électrolyte 50 et 30 et l'anode 40. De préférence, ces moyens de chauffage 130 et 330 sont formés de fours à montée en température rapide et à descente en température rapide, aptes à opérer un balayage d'air chaud, par une circulation forcée en boucle et régulée d'air chaud, sur les interfaces précitées. Typiquement, les moyens de chauffage 130 et 330 sont conçus pour diffuser de l'air comprimé thermostaté, à la précision du °C, par exemple à 60°C, sur les interfaces d'électrolytes 50 et 30.

Plus précisément encore, l'ensemble du dispositif conforme à la présente invention comprenant des phases séquentielles d'interruption de déplacement des films d'alimentation en amont du module d'enroulement E, pour permettre la coupe du complexe, l'évacuation successive de chaque enroulement, et le réengagement d'un élément suivant, de préférence les fours 130 et 330 sont également pilotés de manière séquentielle. C'est-à-dire que la diffusion d'air chaud, dans les fours 130 et 330 est interrompue cycliquement lors de l'arrêt du défilement des complexes, afin d'éviter une montée en température néfaste de la portion des complexes située dans ces fours. Une surexposition à la chaleur de ces tronçons de films pourraient en effet altérer la qualité du complexe final.

Par ailleurs pour éviter une montée en température intempestive des tronçons de film stagnant dans les fours, pendant les phases d'arrêt, les moyens de chauffage 130, 330 peuvent comporter des moyens aptes à insuffler séquentiellement un jet d'air frais comprimé sur les films. Ces moyens sont adaptés typiquement pour ramener la température à l'intérieur des fours à une valeur de l'ordre de 40°C.

De préférence les fours 130, 330 sont formés d'un circuit en boucle. Sur les figures on a référencé 132, 332, les tronçons de ces fours dans lesquels circulent les films multicouches et 134, 334 des ventilateurs assurant séquentiellement la soufflerie d'air chaud et d'air froid. Pour assurer le chauffage, de préférence des éléments chauffants constitués de multifils nus électriquement conducteurs sont placés en regard de la sortie des ventilateurs 134, 334.

On a repéré sur la figure 1 sous les références IX, X, XI, XII, XIII, XIV, XV et XVI respectivement la localisation sur le trajet du dispositif des différents complexes illustrés sur les figures 9, 10, 11, 12, 13, 14, 15 et 16.

Il est important de contrôler le positionnement relatif des bords latéraux longitudinaux des différents films 10, 20, 30, 40, 50 et 60 formant le complexe issu de l'ensemble C, afin d'éviter des contacts électriques parasites entre ces différentes couches.

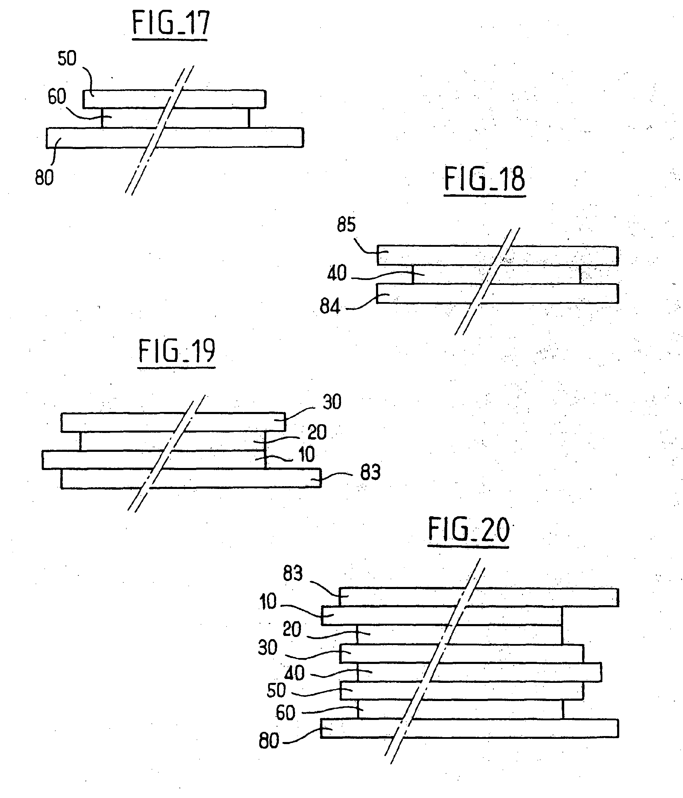

On a représenté sur la figure 17 le positionnement relatif des bords longitudinaux de la pellicule 80, de la cathode 60 et de l'électrolyte 50 en aval du poste de dépelliculage 120. On notera que la cathode 60 possède une largeur inférieure à l'électrolyte 50, que ce dernier déborde de part et d'autre de la cathode 60, que la pellicule 80 possède une largeur supérieure à l'électrolyte 50 et qu'elle déborde de part et d'autre de celui-ci.

On a représenté sur la figure 18, le positionnement relatif des bords longitudinaux des pellicules 84, 85, et de l'anode 40. On notera que l'anode 40 possède une largeur inférieure aux deux pellicules 84, 85, lesquelles peuvent posséder des largeurs identiques et que les pellicules 84, 85, débordent de part et d'autre de l'anode 40.

On a représenté sur la figure 19, le positionnement relatif de la pellicule 83, du collecteur 10, de la cathode 20 et de l'électrolyte 30. On notera que la cathode 20 possède une largeur inférieure au collecteur 10, qu'un premier bord de la cathode 20 affleure un premier bord du collecteur 10, que l'électrolyte 30 possède une largeur supérieure à la cathode 20, qu'elle déborde de part et d'autre de celle-ci, que l'électrolyte 30 déborde par rapport au premier bord de la cathode 20 et du collecteur 10, mais que le second bord de l'électrolyte 30 est situé en retrait du collecteur 10, que la pellicule 83 a un premier bord qui déborde par rapport au premier bord de l'électrolyte 30 mais possède un second bord qui affleure le second bord de l'électrolyte 30.

Enfin, on a représenté sur la figure 20, le positionnement relatif de la pellicule 80, de la cathode 60 de l'électrolyte 50, de l'anode 40, de l'électrolyte 30, de la cathode 20, du collecteur 10 et de la pellicule 83, en sortie du module de complexage C.

On notera que les bords des électrolytes 50 et 30 sont superposés, l'anode 40 ayant un bord en retrait des électrolytes 50 et 30 sur le côté émergeant du collecteur 10, tandis que l'anode 40 dépasse des électrolytes 30, 50 sur le côté opposé.

On a référencé XVII, XVIII, XIX et XX sur la figure 1, la localisation des complexes représentés respectivement sur les figures 17, 18, 19 et 20.

Le positionnement relatif des couches représenté sur les figures 17 et 18 est assuré lors de la réalisation des bobines d'alimentation 104 et 304. Le positionnement relatif représenté sur la figure 19 est assuré lors du pelliculage dans le module 260. Le positionnement relatif représenté sur la figure 20 est assuré dans le module de complexage C.

Afin de définir le positionnement relatif (que l'on peut également qualifier « d'alignement relatif ») nécessaire entre les deux sous-ensembles représentés sur les figures 17 et 19 et la couche d'anode 40, il est prévu de préférence des moyens aptes à détecter le positionnement des bords longitudinaux des complexes respectifs en amont de l'ensemble de complexage C et des moyens aptes à déplacer ces complexes, par rapport à un référentiel commun, en amont du module de complexage C, pour obtenir le positionnement relatif souhaité. De préférence, ces moyens de déplacement agissent sur les moyens d'alimentation 100, 200 et 300. A cette fin, de préférence, chacun de ces moyens d'alimentation 100, 200 et 300 est monté sur une platine individuelle susceptible de déplacement contrôlé par rapport au bâti support général 900 du dispositif. Plus précisément encore, de préférence, chacune de ces platines est montée à pivotement autour d'un axe respectif 101, 201, 301 et associée à un moyen de déplacement contrôlé.

Les moyens de détection de positionnement des bords des complexes sont formés de préférence de moyens optiques, le cas échéant infra-rouge ou laser, ou de moyens ultrasons, disposés sur une fourche à deux éléments émetteur/récepteur disposés respectivement de part et d'autre du trajet de déplacement du multicouche.

Sur la figure 1 on a référencé 140 un tel moyen de détection associé au complexe issu des moyens 100, 280 le moyen équivalent de détection associé au complexe issu des moyens 260 et 340 le moyen équivalent de détection associé au complexe issu des moyens 300. Le moyen de détection 140 est placé entre le rouleau 114 et le four 130. Le moyen de détection 340 est placé entre le rouleau 314 et le four 330. Le moyen de détection 280 est placé entre le module primaire de complexage 260 et le module de complexage C.

Les moyens de déplacement précités peuvent être formés de moyens à base de vérins pneumatiques ou tous moyens équivalents.

De préférence, chacune des platines précitées porte un moyen d'amortissement apte à reposer contre le bâti commun précité 900 pour éviter toute vibration du dispositif. A titre d'exemple non limitatif, ces moyens d'amortissement peuvent être formés de ventouses.

Les axes de pivotement précités 101, 201 et 301 sont de préférence parallèles à la platine 900. Ils passent par le centre (axe de rotation 102, 202, 302) des dérouleurs 104, 204, 304 et par un plan médian de la largeur de la bobine placée sur le dérouleur. Ils sont par ailleurs parallèles aux tronçons de films multicouches respectifs associés, situés immédiatement en amont de l'ensemble de complexage C, imposés par les rouleaux 114, 262 et 314.

A cet égard on notera que le tronçon du film d'anode 40 situé en amont du module de complexage C, guidé par le rouleau 262, est situé sensiblement selon la bissectrice de l'angle formé par les tronçons des complexes 90 et 92 issus respectivement des dérouleurs 104 et 304, en amont du module de complexage, tels que guidés par les rouleaux 114 et 314. Plus précisément encore, en amont du module de complexage, les complexes 90 et 92 font entre eux un angle de l'ordre de 150° et le film d'anode 40, situé selon leur bissectrice est sensiblement à 75° de chacun de ces deux complexes 90 et 92.

De même de préférence, l'anode 40 est située, en amont du module de complexage C, sensiblement selon la bissectrice des tronçons des pellicules 84 et 85 situés en aval des dépelliculeurs 220 et 225, lesquels tronçons de pellicules 84 et 85 font entre eux un angle de l'ordre de 60°.

Les rouleaux de renvoi 110, 112, 114, 221, 222, 226, 310, 312 et 314 permettent de disposer les chargeurs 104, 204 et 304 dans des positions éloignées, et de rapprocher les tronçons de complexe impliqués, en amont du module de complexage C de sorte que l'angle complet formé entre ceux-ci, au niveau du module de complexage, soit inférieur à 180°.

On notera que les moyens de positionnement relatif précités des complexes de base ont non seulement pour fonction de garantir une connectique électrique satisfaisante dans le produit final, et notamment une protection des cathodes par débordement de l'électrolyte, pour éviter les courts-circuits, mais également d'optimiser la surface active en fonctionnement, dans une largeur de complexe la plus faible possible.

Les rouleaux de réception des différents ensembles de dépelliculage 124, 224, 229, 324, 520 et 522 comprennent de préférence des enrouleurs motorisés.

De même les dérouleurs 104, 204 et 304 sont de préférence motorisés et paramétrés pour maîtriser la force de traction, constante sur les films multicouches impliqués. Il est en effet important de maintenir constante la traction exercée sur les films pour avoir une reproductibilité dans la réalisation des éléments.

Les moteurs ainsi associés aux dérouleurs 104, 204 et 304 sont commandés alternativement en moteur, à l'origine d'un enroulement de complexe, puis en frein lorsque l'entraînement du complexe est pris en charge par des moyens aval.

On notera en particulier que dans ce contexte, les moteurs des différents dérouleurs 104, 204, 304 et dépelliculeurs 124, 224, 229, 324, 520 et 522, sont contrôlés par une unité centrale programmée pour faire évoluer de manière adéquate les efforts moteurs et les efforts de freinage respectifs requis en prenant en compte l'évolution du diamètre de films déroulés et respectivement du diamètre de pellicule enroulée.

Ces diamètres peuvent être soit calculés par l'unité centrale, à partir de la longueur respective de complexe et de pellicule traitée, soit mesurée à l'aide de capteurs adéquats, par exemple à ultrasons, équipant respectivement chacun des dérouleurs et enrouleurs concernés 104, 204, 304, 124, 224, 229, 324, 520 et 522.

L'ensemble de complexage C comprend de préférence deux rouleaux pinceurs 400, 410, montés à rotation autour d'axes parallèles et entre lesquels est acheminé l'empilage formé des couches superposées : pellicule 80, cathode 60, électrolyte 50, anode 40, électrolyte 30, cathode 20, collecteur 10 et pellicule 83.

Les deux rouleaux pinceurs 400, 410 sont sollicités en rapprochement relatif sous un effort contrôlé. Ils exercent donc un effort de pression contrôlé sur les films acheminés entre ces rouleaux 400, 410. A cette fin, de préférence, l'axe de rotation du rouleau 400 est fixe tandis que l'axe de rotation du rouleau 410 est monté sur un équipage sollicité à déplacement vers le rouleau 400 précité sous un effort contrôlé, par exemple par un organe élastique telle qu'une lame 412. De préférence le rouleau 410 est également monté sur un équipage escamotable piloté par un moyen d'entraînement, par exemple un vérin, pour assurer sur commande le dégagement du rouleau 410 et faciliter la mise en place du complexe.

On retrouve ainsi en sortie de l'ensemble de complexage C l'empilement illustré sur les figures 15 et 20.

Le cas échéant les rouleaux de complexage 400, 410 peuvent être chauffants. Leur diamètre est typiquement au moins égal à 20 mm.

Le dispositif conforme à la présente invention comprend en outre entre le module de complexage C et le module d'enroulement E, un ensemble 500 à fonctions multiples et ayant notamment pour fonction 1) de contrôler le débit (longueur) de complexe, dans un module 510, 2) de réaliser des coupes longitudinales localisées dans le collecteur 10, au niveau d'un module 520, 3) d'assurer alternativement l'entraînement du complexe au début d'un enroulement puis le freinage de ce complexe lorsque celui-ci est placé en traction par le mandrin 610, au niveau d'un module 530, 4) de retirer les pellicules 80 et 83, dans un module 540, 5) de sectionner les couches 10 à 60 de l'empilement fonctionnel après défilement d'une longueur correspondant à l'enroulement souhaité, dans un module 550 et 6) de chauffer les faces externes de l'empilement résultant à la fin d'un enroulement, au niveau d'un module 560.

Le dispositif de détection 510 est destiné à piloter une correction des défauts de synchronisation pouvant résulter de microglissements du complexe sur les rouleaux 400, 410, afin d'assurer une vitesse constante d'alimentation de l'enrouleur E.

A titre d'exemple non limitatif, un tel dispositif de détection 510 peut être formé d'un rouleau de synchronisation 512 monté sur un levier pivotant 514 et sollicité en appui contre le complexe en défilement par un vérin pneumatique ou tout moyen équivalent, et associé à un codeur absolu 516.

Le complexe est plaqué contre le rouleau 512 par un rouleau 518 placé en amont sur le chemin de déplacement du complexe.

Le module de coupe 520 est destiné à réaliser un refendage linéaire séquentiel, en sens longitudinal, sur le bord du collecteur 10. Sur les figures annexées les tronçons de coupe résultant sont référencés 521. Chaque tronçon 521 a une longueur L1 sensiblement égale, tout en étant légèrement inférieure, à une demie circonférence d'enroulement sur le mandrin 610. L'actionnement de ce dispositif 520 est piloté de sorte que les refendages 521 se retrouvent tous superposés sur une même face de l'élément final bobiné. En d'autres termes ces refendages 521 sont opérés avec un pas P1 identique à la longueur de chaque spire réalisée sur le mandrin 610. Dans la mesure où cette longueur est variable et croissante, en raison de l'épaisseur accumulée sur le mandrin 610, de préférence le pas des refendages 521 est également variable.

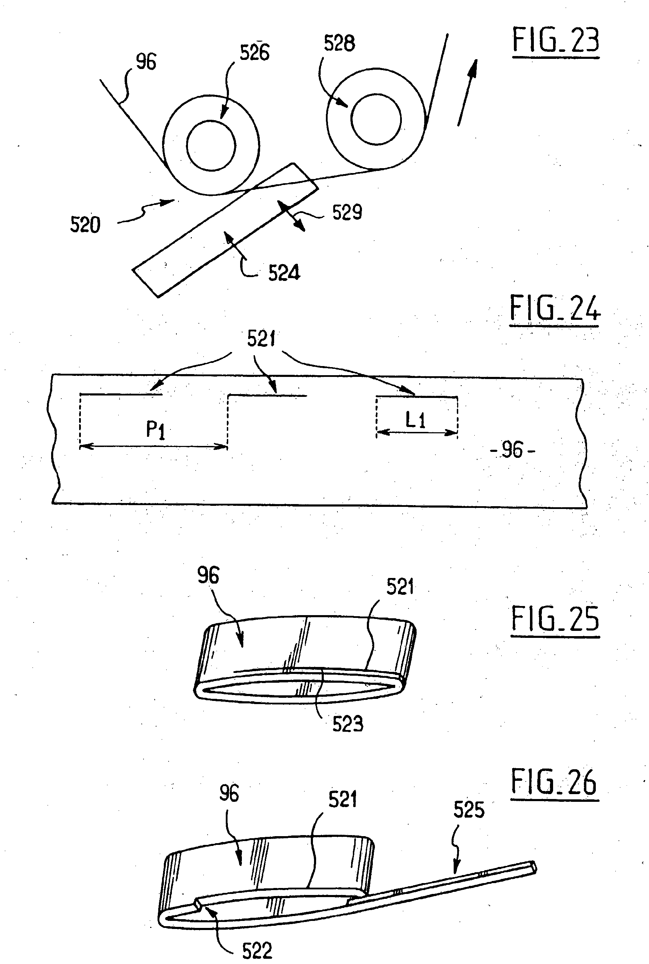

Comme on l'a illustré schématiquement sur la figure 26 annexée, au niveau du poste de conformation finale 700, un segment de découpe transversale 522 est opéré entre une extrémité axiale de la découpe précitée 521 et le bord libre adjacent du collecteur 10, puis la bande latérale externe 523 ainsi délimitée dans le collecteur 10 est déployée vers l'extérieur de l'élément enroulé, pour servir de connecteur sur le concentrateur de courant. Sur la figure 26 la partie de bande de collecteur 10 ainsi déployée est référencée 525.

Le dispositif de refendage 520 est de préférence de type « coupe en l'air ». Il comprend une lame de refendage oscillante 524 adaptée pour venir sectionner localement et séquentiellement le collecteur 10, entre deux rouleaux 526 et 528 servant d'appui au complexe. Sur la figure 23 le mouvement de pivotement de la lame 524 est schématisé sous la référence 529.

Le module d'entraînement 530 comprend de préférence deux rouleaux pinceurs 532, 534, entre lesquels chemine l'ensemble complexe illustré sur les figures 15 et 20. Ces deux rouleaux 532, 534, sont associés à des motorisations respectives. Lors de l'acheminement de l'extrémité avant du complexe vers le mandrin 610, les rouleaux 532, 534, sont pilotés en mode moteur d'entraînement. En revanche, une fois l'extrémité avant du complexe saisie par le mandrin 610, celui-ci devient moteur, et les rouleaux 532, 534, sont pilotés, par leur moteur respectif, en mode de freinage. On garantit ainsi un placage étroit du complexe sur le mandrin 610. Ces deux rouleaux pinceurs 532, 534 sont situés à proximité du mandrin enrouleur 610, en amont de celui-ci.

L'entraînement des rouleaux pinceurs 400, 410 est asservi sur celui des rouleaux pinceurs 532, 534 qui opèrent en maître, par rapport aux rouleaux esclaves 400, 410.

L'un au moins des rouleaux 532, 534 est associé à un moyen de sollicitation tel que les rouleaux 532 et 534 exercent sur le complexe qu'ils encadrent, un effort de pincement contrôlé.

Par ailleurs de préférence, l'un au moins des rouleaux 532, 534, par exemple le rouleau 534, est monté sur un équipage escamotable 535, par exemple piloté par un vérin 536, pour faciliter l'insertion du complexe entre les rouleaux 532 et 534.

Le retrait des pellicules 80 et 83 est opéré, dans le module 540, à l'aide de racleurs 541, 543 similaires aux racleurs 122 et 322 précités. Les pellicules 80 et 83 sont dirigées, après dépelliculage, grâce à des rouleaux 542, 544 sur des rouleaux d'accumulation 546, 548. Ceux-ci sont motorisés, comme indiqué précédemment.

Le sectionnement transversal complet de l'empilement des 6 couches résultantes 10, 20, 30, 40, 50 et 60 du complexe est opéré, juste en aval des lames de dépelliculage 541, 543, dans le module 550, par tous moyens appropriés.

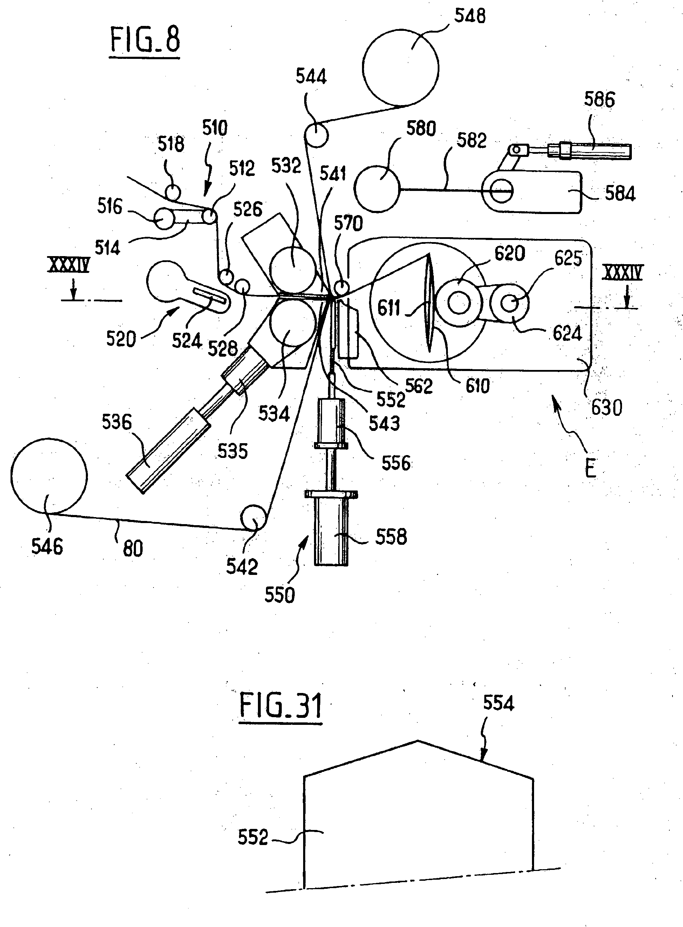

De préférence ces moyens de coupe 550 comprennent une lame 552 comprenant un bord tranchant 554 formé d'un dièdre convexe à deux pentes symétriques (voir figure 31) animée d'une vitesse rapide de déplacement, sous faible course lorsque la coupe est requise.

Les déplacements de la lame de coupe 552 sont pilotés par un moyen 556 formé de préférence d'un vérin. Par ailleurs la lame de coupe 552 est de préférence placée sur un équipage escamotable piloté par un moyen de déplacement spécifique, par exemple un second vérin 558, pour permettre d'escamoter la lame de coupe sur demande, afin de faciliter la mise en place du complexe, ou toute autre intervention de maintenance requise.

Le fait que la lame de coupe présente la forme d'un dièdre symétrique à deux pentes présente certains avantages par rapport à une lame classique qui présenterait une pente simple. La symétrie de la lame permet de limiter la déformation transversale du film. Le découpage par une lame à pente simple risquerait en effet de générer lors de sa pénétration dans le film des contraintes transversales qui pourraient fausser l'ajustement latéral du film. En outre, pour un même angle de lame, la lame à deux pentes présente une hauteur inférieure à la lame à pente simple, de sorte que la lame à deux pentes peut être actionnée avec une course moindre que la lame à pente unique. Son actionnement est par conséquent plus rapide.

L'angle du bord tranchant 554 de la lame 552 est typiquement de l'ordre de 170° pour un angle de coupe de 10° dans l'épaisseur.

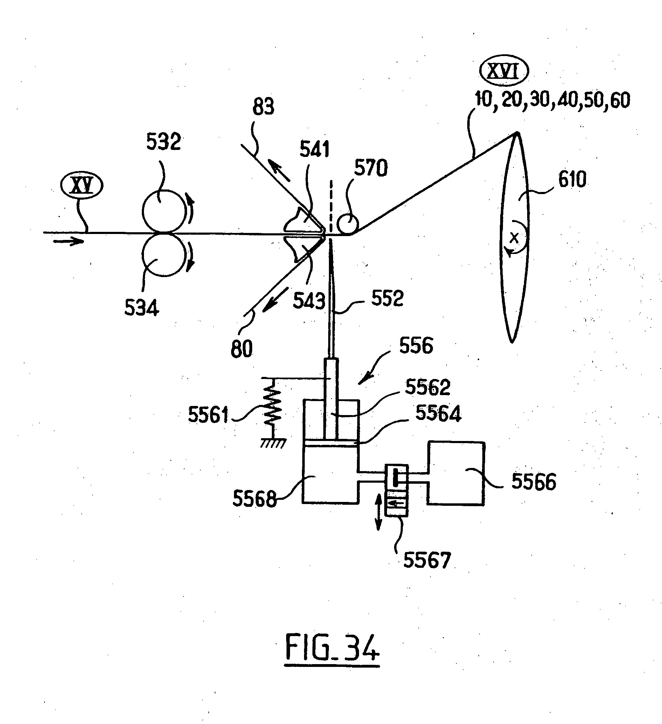

Sur la figure 34, on a représenté de manière schématique les moyens de coupe 550 et les moyens d'actionnement associés.

Les moyens de coupe 550 sont disposés sur le chemin de défilement du complexe entre les moyens de dépelliculage 541, 543 et le rouleau d'appui 570, le plus près possible des moyens de dépellliculage.

Ces moyens de coupe comprennent la lame 552 (voir figure 31). Cette lame 552 est commandée en déplacement par des moyens d'actionnement 556. Ces moyens d'actionnement 556 comprennent un vérin pneumatique comprenant une tige 5562 solidaire d'un piston 5564 délimitant avec le corps cylindrique du vérin une chambre 5568 d'injection de gaz sous pression.

La chambre 5568 d'injection est reliée à un distributeur de gaz sous pression 5566 directement juxtaposé au vérin 556. La chambre 5568 communique avec le distributeur de gaz 5566 par l'intermédiaire d'une vanne 5567 pouvant être commandée en position ouverte ou fermée.

Lorsque la vanne 5567 est commandée en position ouverte, le gaz sous pression est injecté quasi-instantanément du distributeur 5566 vers la chambre 5568 d'injection. L'injection de gaz provoque la translation du piston 5562 et par conséquent de la lame qui vient sectionner le complexe suivant la ligne de coupe représentée en pointillés sur la figure 34.

Grâce à ce dispositif de coupe, une coupe peut être réalisée en moins de 0,2 secondes (intervalle de temps entre la commande de la coupe et le sectionnement complet du complexe). Le déclenchement rapide du dispositif est obtenu grâce au fait que le distributeur 5566 est directement juxtaposé au vérin. La chambre d'injection 5568 est alimentée directement par le distributeur 5566 sans tuyauterie. Ainsi, le circuit pneumatique entre le distributeur 5566 et la chambre d'injection 5568 est extrêmement court et permet une montée rapide en vitesse du piston.

Cette montée en vitesse rapide permet de combiner à l'effet tranchant de la lame 552, un effet de frappe sur le film complexe qui garantit l'obtention d'une coupe franche.

Comme on peut le constater sur la figure 34, le vérin 556 est un vérin de type « simple effet », il ne peut être alimenté en gaz sous pression que du côté du piston 5564 ne supportant pas la tige 5562. Le côté supportant la tige est à l'air libre. Le rappel du piston est donc réalisé par un ressort de rappel 5561 lié à la tige 5562. Ce ressort 5561 permet de ramener la lame 552 et le piston 5564 en position de repos après leur actionnement.

Les moyens d'actionnement du dispositif de coupe 550 sont commandés en synchronisation avec l'ensemble des rouleaux du dispositif de réalisation d'ensembles de stockage.

En particulier, les rouleaux 532 et 534 d'entraînement du film complexe et le mandrin 610 sont pilotés en frein pour immobiliser le tronçon de film soumis aux moyens de coupe lors de son sectionnement. Au moment du déclenchement du système de coupe, le tronçon de film est donc maintenu immobile, tendu en position entre les rouleaux 532 et 534 et le rouleau d'appui 570.

En variante, les moyens de coupe peuvent être formés d'un fil tendu ou d'une lame à pointes multiples (du type scie égoïne) ou encore d'un laser. On notera que l'utilisation d'un laser suppose l'aspiration de la matière de film sublimée pour éviter une pollution des couches et/ou des éléments du dispositif de réalisation d'ensembles de stockage.

Dans tous les cas, la coupe réalisée est avantageusement une coupe en l'air.

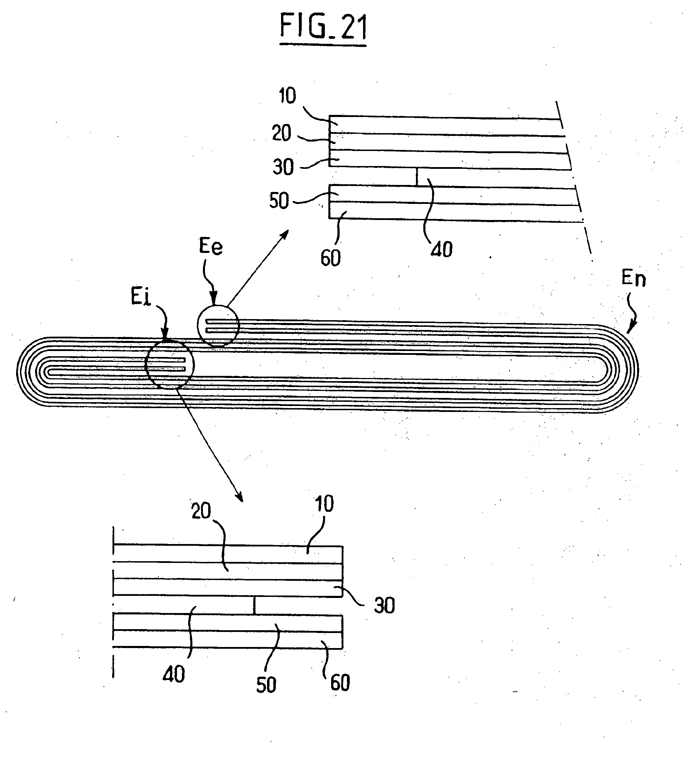

La coupe opérée par le moyen de coupe 552 est opérée sensiblement au milieu de l'intervalle formé dans la couche d'anode en lithium 40, au niveau du poste de frappe 572/574. Ainsi comme on le voit sur la figure 21, la couche d'anode 40 est placée en retrait des autres couches composant l'enroulement, tant au niveau de l'extrémité avant que de l'extrémité arrière de l'enroulement.

Par ailleurs comme on le voit sur la figure 21, de préférence les deux extrémités axiales Ei, Ee de l'enroulement fini En ne sont pas superposées. En d'autres termes l'extrémité externe Ee de l'enroulement est interrompue en deçà de l'extrémité interne Ei, pour éviter une surépaisseur à ce niveau. Ainsi l'enroulement fini aplati présente globalement une épaisseur identique sur toute son étendue.

Le chauffage des faces externes de l'empilement est opéré par tous moyens appropriés dans le module 560, par exemple par soufflage d'air chaud pulsé ou passage sur un rouleau chauffant.

Ce chauffage est de préférence assuré par une barre escamotable de soufflage d'air chaud 562 située immédiatement en aval du dispositif de coupe 550, pour chauffer une bande transversale du complexe, afin de préparer le thermo-collage de la fin de l'enroulement.

On va maintenant décrire les moyens d'enroulement E conformes à l'invention.

Ceux-ci comprennent principalement un mandrin 610 monté à rotation autour d'un axe 611.

Le mandrin 610 présente une section droite, transversale à son axe de rotation 611, non circulaire de révolution. Le mandrin 610 est sensiblement plat. Il a une section générale en fuseau. Typiquement le rapport entre un grand axe et un petit axe de sa section droite est supérieur à 3, préférentiellement supérieur à 5 et très avantageusement supérieur à 10. Il possède avantageusement une section droite généralement elliptique.

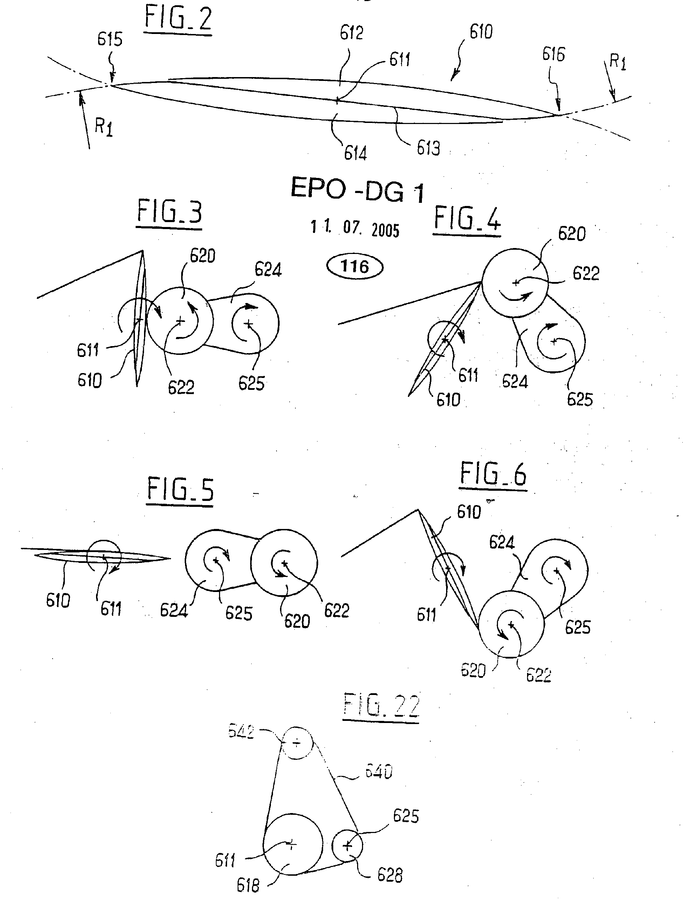

Plus précisément, l'enveloppe externe du mandrin 610 est de préférence délimitée par deux secteurs de cylindre de révolution convexes ayant des rayons identiques (R1 sur la figure 2), mais des axes parallèles éloignés ; par ailleurs cette enveloppe externe délimitant la section droite du mandrin possède des extrémités émoussées 615, 616 à faible rayon.

Le mandrin 610 a une longueur (considérée parallèlement à son axe de rotation 611) supérieure à la largeur des complexes à enrouler.

Plus précisément encore, de préférence, le mandrin 610 est formé de deux mors 612, 614, symétriques et complémentaires. L'interface entre les deux mors 612, 614, c'est-à-dire la face d'appui mutuelle entre ceux-ci, en position d'enroulement, référencée 613 sur les figures est de préférence plane et relie les deux surfaces courbes d'enveloppe externe convexe du mandrin à distance des extrémités effilées de l'ellipse d'enveloppe externe.

A titre d'exemple non limitatif, le grand axe du mandrin 610, formé par les deux mors 612 et 614 accolés, est de l'ordre de 12 cm tandis que le petit axe du mandrin 610, formé par les deux mors 612 et 614 accolés, est de l'ordre de 9 à 10 mm, l'angle formé entre le plan oblique qui correspond à l'interface 613 entre les deux mors 612, 614 et le grand axe du fuseau est typiquement de l'ordre de 2,5°, le fuseau est terminé, sur les extrémités 615, 616 du grand axe, par des arcs de cercle de l'ordre de 0,15mm de rayon, et la distance séparant les centres des surfaces principales cylindriques du mandrin est supérieure à 6 fois leur rayon R1.

Les deux mors 612, 614, sont associés à des moyens d'entraînement, par exemple des vérins hydrauliques ou équivalents adaptés pour assurer sur commande un déplacement relatif contrôlé des deux mors entre une première position dans laquelle les deux mors 612, 614, sont écartés pour permettre l'insertion de l'extrémité avant d'un empilement complexe 10 à 60 à enrouler et une seconde position dans laquelle les deux mors 612, 614, sont accolés pour permettre l'enroulement de l'empilement complexe précité.

Le mandrin 610 formé par la coopération des deux mors 612, 614, est lui-même entraîné à rotation autour de son axe 611, à vitesse non constante, selon des modalités qui seront définies par la suite.

Le mandrin 610 est associé à un rouleau presseur 620.

Celui-ci est monté libre de rotation autour de son axe 622 sur l'extrémité d'un bras rotatif 624.

Le bras 624 est animé d'un mouvement rotatif autour d'un axe 625 excentré par rapport à l'axe 622, et selon une vitesse double de celle du mandrin 610, de telle sorte que le rouleau 620 roule successivement sur chacune des faces du mandrin 610, plus précisément sur l'empilement complexe 10 à 60 enroulé sur celui-ci, afin de le presser régulièrement et d'éviter toute formation de plis dans l'empilement. Le bras 624 est de préférence entraîné en rotation mécaniquement par la rotation du mandrin 610 avec un rapport multiplicateur égal à 2.

Le mandrin 610 et le bras 624 tournent dans le même sens de rotation.

La cinématique de déplacement du mandrin 610 et du rouleau 620 est schématisée sur les figures 3 à 6 associées.

A titre d'exemple non limitatif, comme illustré sur la figure 22, le mandrin 610 et le bras 624 peuvent être entraînés par une courroie commune 640 associée à un moteur 642, grâce à des rouleaux respectifs 618, 628 en prise avec ladite courroie commune 640. Pour assurer une vitesse double au bras 624, le rouleau 628 associé à celui-ci possède un rapport d'entraînement deux fois plus faible que le rouleau 618 associé au mandrin 610, soit typiquement une dimension circonférentielle deux fois plus faible.

On notera que le dispositif comprend de préférence en outre, un rouleau 570, en aval de la lame de coupe 552, en regard de la buse de soufflage d'air chaud 562.

Ce rouleau 570 sert d'ultime guidage au complexe formé, avant enroulement sur le mandrin 610.

La génératrice du rouleau 570 sur laquelle s'appuie le complexe, est située dans un plan défini par la génératrice du rouleau amont 534 et la génératrice du mandrin 610 correspondant au petit axe de celui-ci (laquelle génératrice sert d'appui au complexe quand celui-ci est positionné avec son grand axe parallèle au plan précité, comme illustré sur la figure 5).

L'ensemble formé par la combinaison du mandrin 610, du bras 624 et du rouleau presseur 622 est monté sur un tiroir 630 lui-même associé à des moyens d'entraînement propres à déplacer cet ensemble à translation entre une position d'enroulement telle qu'illustrée sur la figure 1, rapproché du module 500 et une position d'évacuation, éloignée de ces moyens 500, une fois la longueur souhaitée d'empilement enroulée sur le mandrin 610, pour faciliter le retrait de l'enroulement obtenu.

Le tiroir 630 précité peut également être déplaçable dans une position initiale additionnelle temporaire, rapprochée des rouleaux pinceurs d'alimentation 532, 534, lorsque ceux-ci sont pilotés en moteur, pour assurer la saisie de l'extrémité avant du complexe au début de l'enroulement. Une fois cette saisie opérée, de préférence le tiroir 630 est écarté des rouleaux pinceurs 532, 534 pour l'enroulement proprement dit.

Pour achever l'enroulement et éviter un flottement de l'extrémité externe arrière du complexe enroulé, le mandrin 610 est de préférence animé d'un mouvement de rotation complet sur 360° après rupture du complexe enroulé et enroulement complet de ce complexe et le rouleau presseur 620 est maintenu en appui sur l'enroulement pendant cette rotation additionnelle afin de parfaire le « collage » de la dernière spire de l'enroulement, grâce au préchauffage précité par les moyens 560. Le cas échéant, ce chauffage peut être complété par un soufflage d'air chaud au niveau du poste d'enroulement E.

On obtient ainsi un collage de la queue de l'enroulement, sans apport de colle.

On notera que le dispositif peut comprendre en outre, comme illustré sur la figure 8, un rouleau presseur additionnel escamotable 580, placé entre le rouleau 570 et le mandrin 610. Un tel rouleau 580 a pour fonction de permettre le blocage du complexe lors de la coupe et le plaquage de la fin de la bande, sur le mandrin 610. Le rouleau 580 est de préférence lié, par une lame élastique 582, à un équipage oscillant 584, piloté par un vérin 586.

Lors du bobinage de l'enroulement de complexe, sur le mandrin 610, le rouleau 580 est placé dans la position illustrée sur la figure 8, écartée du trajet de déplacement du complexe et éloignée du mandrin 610. A la fin d'un enroulement, après coupe du complexe, au contraire, l'équipage oscillant précité et le rouleau 580 associé, sont déplacés de sorte que le rouleau 580 soit plaqué sur la face du mandrin 610 opposée à celle sur laquelle repose le rouleau 620.

Cet enroulement, obtenu sous une forme généralement aplatie, grâce à la géométrie elliptique du mandrin 610 est ensuite retiré du mandrin 610 et évacué grâce à un robot ou tout moyen équivalent adapté vers un poste de pressage 700 destiné à parfaire la planéité de chaque enroulement obtenu.

Un tel robot peut être formé d'un robot pneumatique à pinces de serrage assurant la préhension de l'élément enroulé de stockage d'énergie électrique sur le mandrin 610, son extraction de celui-ci et par divers mouvements de rotations et de translations, la mise en place de l'élément dans le poste de pressage 700.

Pour l'essentiel ce poste de pressage comprend une presse, formé par exemple d'un vérin presseur 710, chargé de la mise à plat finale de l'élément. Celui-ci opère de préférence en temps masqué, pendant qu'un élément suivant est en cours d'enroulement.

Pour faciliter le retrait de l'enroulement obtenu, le dispositif peut comprendre des moyens aptes à assurer pendant une séquence limitée, à la fin de l'enroulement, un déplacement relatif et alternatif à translation entre les deux mors 612 et 614 composant le mandrin 610, selon une direction parallèle à l'interface 613, pour faire ainsi varier la longueur du grand axe du mandrin, afin de « desserrer » légèrement l'enroulement par rapport au mandrin 610, décoller la première spire et dépincer l'accrochage du premier tour.

Chaque enroulement peut ensuite être dirigé vers un magasin pour la réalisation des étapes ultérieures requises pour la connexion sous la configuration série/parallèle souhaitée. Un tel magasin et les moyens mis en oeuvre pour assurer les liaisons requises série/parallèle, ne seront pas décrits plus en détail par la suite.

Comme on l'a indiqué précédemment, selon une caractéristique avantageuse de l'invention, le mandrin 610 est entraîné à rotation à une vitesse angulaire non constante contrôlée de telle sorte que la vitesse linéaire de défilement de l'empilement complexe alimentant le mandrin 610 soit constante.

Grâce à cette caractéristique, l'invention permet de garantir un effort de traction constant sur le complexe et par conséquent un enroulement parfait sur le mandrin 610, exempt de tout pli ou défaut équivalent.

Par ailleurs grâce au défilement à vitesse constante du complexe, on évite toute nécessité de disposer d'un magasin intermédiaire, en amont du module d'enroulement E, pour absorber les à-coups d'accélération - décélération de la bande. Et l'on permet ainsi la réalisation de l'ensemble du dispositif sous forme compact, dans un volume limité.

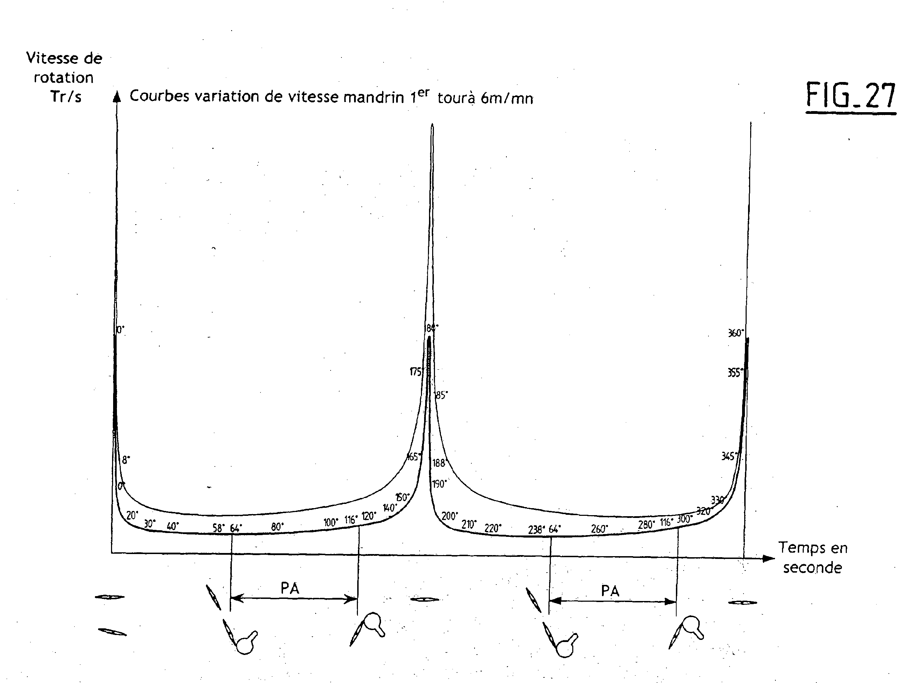

On a illustré en traits forts sur la figure 27, la courbe de variation de vitesse du mandrin 610 à l'origine de l'enroulement.

Sur la même figure 27, on a illustré en traits fins, la courbe de variation de vitesse du bras 624 portant le rouleau presseur 620.

On notera que sont illustrées sous l'axe des abscisses de la figure 27, les positions relatives du mandrin 610 et du rouleau presseur 620.

Plus précisément encore, la vitesse de rotation angulaire du mandrin 610 est corrigée au cours de l'enroulement, pour tenir compte de l'évolution du rayon d'enroulement résultant de la variation d'épaisseur de complexe accumulé sur le mandrin 610 afin de garantir la constance de vitesse linéaire de défilement.

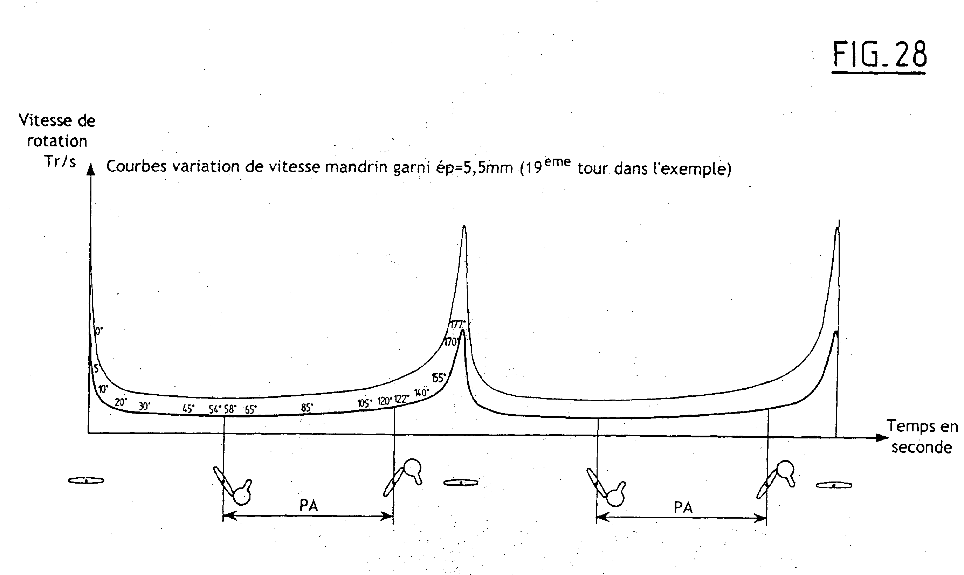

On a ainsi illustré sur la figure 28 en traits forts la courbe de variation de vitesse du mandrin 610 garnie par une épaisseur de 5,5mm de complexe (correspondant par exemple à 19 tours d'enroulement) et en traits fins la courbe de variation correspondante de vitesse du rouleau 620.

Sur les figures 27 et 28, on a repéré, sous l'axe des abscisses, sous la référence PA, les plages angulaires dans lesquelles le rouleau presseur 620 est en appui sur le mandrin 610.

On notera à l'examen des figures 27 et 28, que le vitesse de rotation du mandrin 610 et de l'équipage 624 portant le rouleau presseur 620, est élevée quand l'enroulement du complexe est opéré sur un faible rayon (c'est à dire un rayon d'enroulement de l'ordre de grandeur du petit axe du mandrin 610), soit lorsque le mandrin 610 est orienté sensiblement parallèlement au tronçon de complexe acheminé. Puis cette vitesse chute quand le rayon d'enroulement grandit (et s'approche du grand axe du mandrin 610), c'est à dire lorsque le mandrin 610 est orienté sensiblement perpendiculairement au tronçon de complexe acheminé.

Ainsi la vitesse de rotation du mandrin 610 et du rouleau presseur 620 présente une évolution cyclique : 2 pics par rotation de 360°. Cette évolution est inversement proportionnelle à l'évolution du rayon d'enroulement.

Par ailleurs on notera que le rouleau presseur 620 entre en contact, et reste en contact, avec le film complexe enroulé sur le mandrin 610, lorsque celui-ci est entraîné en rotation à basse vitesse. Cette disposition permet de garantir un bon contact entre le rouleau presseur 620 et le film enroulé et par conséquent entre les différentes couches superposées du film enroulé.

La figure 28 qui correspond à la fin d'un enroulement présente une plage d'évolution de vitesse moins étendue. En effet en raison de l'épaisseur de complexe accumulée sur le mandrin 610, le rapport de rayon d'enroulement couvre une plage moins étendue qu'à l'origine de l'enroulement.

Ainsi lors de l'enroulement d'un élément, la vitesse de rotation varie à chaque tour sur une période de 180°. De plus la durée d'enroulement par tour augmente du fait que la longueur d'enroulement sur le mandrin 610 augmente d'un tour à l'autre en raison de l'épaisseur rajoutée sur le mandrin 610.

En conséquence les vitesses et les accélérations diminuent progressivement au cours de l'enroulement.

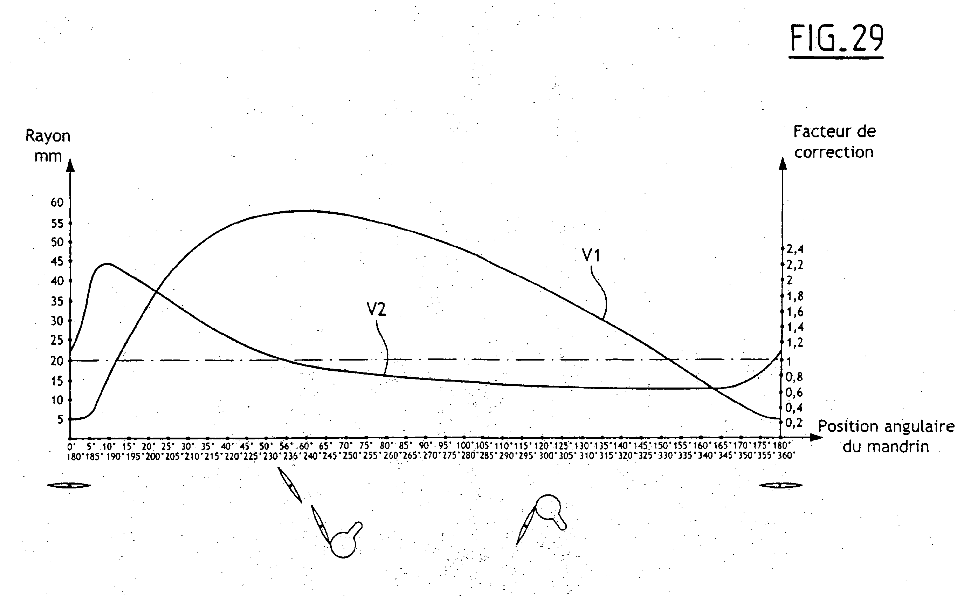

On aperçoit par ailleurs sur la figure 29, d'une part, une courbe lissée V1 de variation du rayon d'enroulement en fonction de la position angulaire du mandrin et, d'autre part, une courbe lissée V2 de variation d'un facteur de correction en fonction de cette position angulaire.

On a porté en abscisse une plage angulaire de 0 à 180°. Celle-ci couvre également la plage de 180 à 360°, les courbes précitées présentant une périodicité sur 180°. Par ailleurs on a porté sur les échelles d'ordonnées, à gauche l'amplitude du rayon d'enroulement et à droite l'amplitude du facteur de correction.

Les inventeurs ont en effet déterminé que le facteur de correction à appliquer sur l'évolution de base V1 de la vitesse de rotation angulaire tenant compte de la seule évolution du rayon d'enroulement nu en fonction de la position angulaire du mandrin, pour tenir compte de la variation d'épaisseur de l'enroulement, pouvait être assimilé à une telle courbe lissée V2 qui varie en fonction de la position angulaire du mandrin 610, tout en étant fixe pour un angle donné quelque soit le nombre de spires enroulées précédemment sur le mandrin.

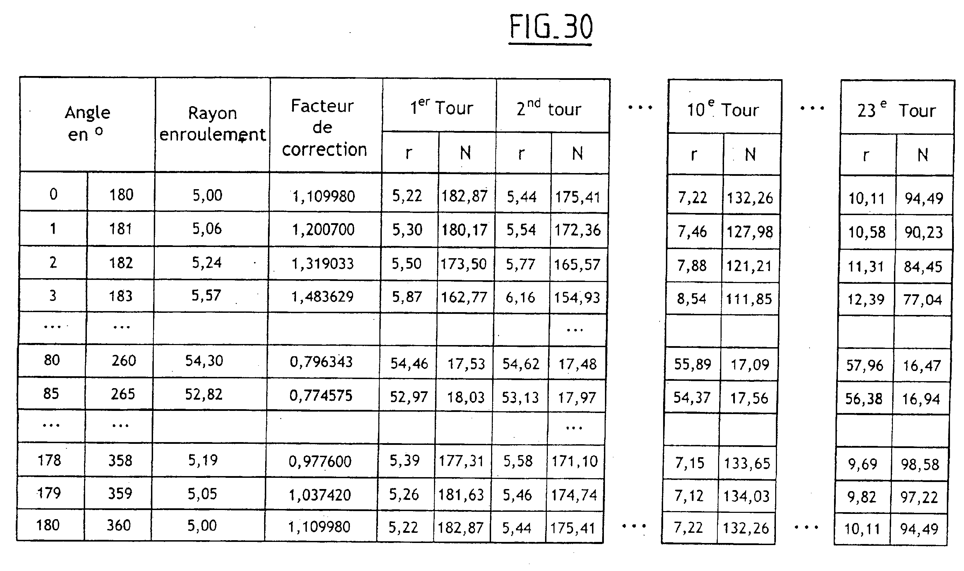

On a illustré sur la figure 30 un tableau schématisant un exemple de données utilisées dans le cadre de la présente invention pour piloter le moteur d'entraînement du mandrin 610.

On retrouve sur les deux premières colonnes du tableau de la figure 30, l'angle de rotation du mandrin.

Ces deux colonnes correspondent respectivement aux plages de 0 à 180° et de 180 à 360°, en raison de la symétrie existant entre les deux demis tours successifs d'une même spire d'enroulement. En effet une spire complète n'est enroulée qu'après une rotation de 360°. On retrouve donc la même épaisseur sur les deux faces du mandrin pendant les deux demi périodes successives de 0 à 180° et de 180 à 360° d'enroulement d'une même spire.

La troisième colonne de la figure 30 représente le rayon du mandrin 610 nu, c'est à dire à l'origine de l'enroulement.

La quatrième colonne de la figure 30 représente le facteur de correction illustré sur la figure 29.

Les paires de colonnes qui suivent sur la figure 30 représentent deux à deux, pour chaque tour d'enroulement, l'une le rayon d'enroulement, et l'autre la vitesse de rotation du mandrin 610.

Plus précisément, comme le montre le tableau de la figure 30, pour chaque tour d'enroulement, on calcule le rayon d'enroulement r sur la base de la relation :

$$r = ro + (F \cdot n \cdot e)$$

dans laquelle :

ro représente le rayon du mandrin (610) nu,
F représente le facteur de correction mentionné dans la quatrième colonne,
n représente le rang de la spire en cours, ie le nombre d'enroulements opéré sur le mandrin 610 et
e représente l'épaisseur du complexe enroulé sur le mandrin 610.

Puis l'on calcule la vitesse de rotation du mandrin 610 sur la base de la relation :

$$\omega = V / (2 . \Pi . r)$$

dans laquelle :

V représente la vitesse linéaire constante recherchée pour le complexe, et
r représente le rayon d'enroulement précédemment calculé.

En pratique, le pilotage du moteur d'entraînement du mandrin 610 peut être opéré, soit à l'aide de données précalculées et stockées dans des mémoires adaptées, soit à l'aide de données calculées en direct par une unité centrale sur la base, d'une part, de la loi d'évolution du rayon d'enroulement en fonction de la géométrie du mandrin 610 et d'autre part de la loi de correction dépendant de l'évolution de ce rayon en fonction de l'épaisseur de l'enroulement réalisé précédemment sur le mandrin.

Les données précitées sont appliquées successivement à chaque fraction angulaire de la rotation du mandrin 610, sur le moteur d'entraînement de celui-ci.

A titre d'exemple non limitatif, pour une vitesse linéaire de l'ordre de 6 m/mn, le mandrin 610 atteint une vitesse de l'ordre de 180 tr/mn, soit une vitesse angulaire de l'ordre de 1090 °/s, d'où une vitesse d'échantillonnage de l'ordre de 1 °/ms.

Le choix de travailler au plus près du degré impose un rafraîchissement de la consigne de vitesse moteur proche de la ms.

Dans ce contexte la consigne de vitesse destinée à être appliquée au moteur est choisie de nature numérique, pour éviter le traitement de convertisseurs analogique/numérique.

Bien évidemment, un module de contrôle assure l'asservissement complet de l'ensemble des moyens intervenant dans la réalisation de l'enroulement du complexe.

Les différents axes précités notamment les axes 102, 202, 302, des rouleaux 104, 204, 304, l'axe 611 de rotation du mandrin 610, l'axe de rotation du rouleau presseur 620 et l'axe de pivotement du bras oscillant 624, les axes des rouleaux 124, 224, 240, 250, 229, 320, 520 et 522 associés aux pellicules, les axes des rouleaux de renvoi 110, 112, 114, 221, 222, 210, 212, 226, 310, 312, 314 et les axes des rouleaux presseur 262, 264, 400, 410 sont parallèles entre eux et de préférence horizontaux.

Selon une autre caractéristique avantageuse de l'invention, le dispositif comprend un boîtier scindé en deux compartiments séparés par une cloison verticale 900 : un premier compartiment, sous atmosphère sèche contrôlée qui loge l'ensemble des moyens 100, 200, 300, 400, 500, 600 et 700 précités et un deuxième compartiment qui loge les moyens de commande et d'entraînement/motorisation associés. La cloison verticale de séparation précitée constitue le bâti support des différents axes de rotation précédemment décrits.

Le cas échéant un balayage supplémentaire d'air sec peut être prévu dans l'enceinte opérationnelle.

La présente invention permet typiquement la réalisation d'un enroulement de complexe comprenant entre 16 et 19 tours, correspondant à une longueur de complexe de l'ordre de 4 à 5,5m, soit une épaisseur totale d'enroulement de l'ordre de 5,5 mm. La vitesse de défilement du complexe est typiquement comprise entre 2 et 10 m/ mn. Elle est avantageusement de l'ordre de 6m/mm.

A titre d'exemple non limitatif le dispositif conforme à la présente invention est adapté pour traiter des laizes de complexe de largeur comprise entre 50 et 150 mm.

La présente invention offre de nombreux avantages par rapport aux moyens proposés dans l'état de la technique.

De façon non limitative on citera :

- le fait que la forme quasi plate du mandrin d'enroulement 610 évite de générer les contraintes rencontrées avec l'état de la technique, lors de la mise à plat,

- le réchauffage des complexes dans des fours et le complexage des multicouches formant cathode et collecteur sur le lithium, permettant de réaliser un collage de bonne qualité sans reprise intermédiaire des produits en optimisant le contact surfacique des couches entre elles, ceci améliorant les échanges ioniques entre les différentes couches fonctionnelles du produit final,

- le fait que toutes les fonctions du dispositif sont pilotées en automatique avec des paramétrages et des régulations précises de chaque fonction, ce qui permet d'assurer la reproductibilité avec un niveau de qualité toujours contrôlé.

On rappelle que d'une manière générale, tous les rouleaux enrouleurs ou dérouleurs mis en oeuvre dans le dispositif de l'invention ont des fonctions moteur et/ou frein alternativement, selon la séquence de l'enroulement impliqué, pour garantir une traction constante sur l'ensemble des films, complexes et pellicules associés.

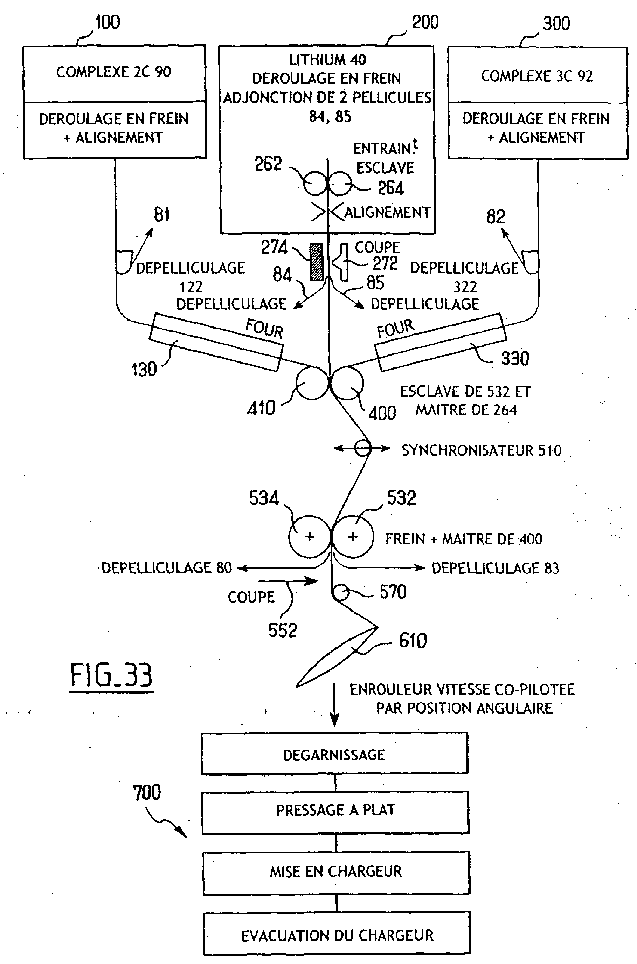

Comme indiqué précédemment, la figure 33 représente un synoptique général des moyens principaux du dispositif conforme à la présente invention.

Bien entendu la présente invention n'est pas limitée aux modes de réalisation particuliers qui viennent d'être décrits, mais s'étend à toute variante conforme à son esprit.

Bien que le dépelliculage mécanique par lame, précédemment décrit, soit préféré car il évite l'introduction de produit chimique dans l'environnement du processus, en variante, on peut envisager de dépelliculer les complexes à l'aide d'un jet de solvant injecté au niveau de l'interface entre la face externe du complexe et la pellicule concernée.

Le dispositif conforme à l'invention peut également comprendre des moyens de dépelliculage comportant des moyens d'application d'un jet d'air, de préférence froid, sur la zone de divergence entre la pellicule et l'ensemble dont elle est déviée.

De même les fours à circulation d'air chaud pourront être remplacés par des rouleaux chauffants.

On a illustré sur les figures annexées et décrit précédemment une mise en oeuvre selon laquelle le complexe final de 6 couches est opéré par empilement in situ de trois complexes de base respectivement à 1, 2 et 3 couches, initialement séparés et préréalisés. En variante cependant, on peut envisager dans le cadre de la présente invention d'alimenter le mandrin 610 à l'aide d'un tel complexe de 6 couches préréalisé sur une machine adaptée. Dans ce cas l'interruption de l'anode de lithium doit être de préférence intégrée dans ce complexe. Selon encore une autre variante, dans le cadre de la présente invention, les différents complexes de base pourraient être réalisés in situ sur le dispositif de l'invention, à partir de films monocouches.

Les différents moyens mécaniques de coupe précédemment décrits pourront être remplacés par tous moyens équivalents, par exemple à base de laser.

## Revendications

1. Dispositif de réalisation d'ensembles de stockage d'énergie électrique, comprenant des moyens d'entraînement d'un film complexe, des moyens d'enroulement (610) du film complexe (10, 20, 30, 40, 50, 60), des moyens (532, 534, 570, 610) pour tendre le film complexe sur un tronçon et des moyens de coupe (550) mobiles aptes à être actionnés séquentiellement pour venir effectuer une coupe en l'air du film complexe (10, 20, 30, 40, 50, 60) au niveau du tronçon tendu, **caracterisé en ce que** lesdits moyens pour tendre le film complexe comprennent un rouleau (570) sur lequel le film complexe (10, 20, 30, 40, 50, 60) vient en appui, le rouleau (570) étant disposé entre les moyens de coupe (550) et les moyens d'enroulement (610) du film complexe, sur la trajectoire du film.

2. Dispositif selon la revendication 1, **caractérisé en ce que** les moyens de coupe (550) comprennent une lame (552) comprenant un bord tranchant (554) formé d'un dièdre convexe à deux pentes symétriques.

3. Dispositif selon l'une des revendications qui précèdent, **caractérisé en ce qu'**il comprend des moyens d'actionnement des moyens de coupe (550), ces moyens d'actionnement (556) comprenant un actionneur linéaire apte à déclencher la coupe du film en moins de 0,2 secondes.

4. Dispositif selon la revendication 3, **caractérisé en ce que** l'actionneur linéaire est un vérin pneumatique présentant un distributeur directement juxtaposé au vérin.

5. Dispositif selon l'une des revendications 3 ou 4, **caractérisé en ce que** les moyens d'actionnement comprennent des moyens de rappel pour rappeler les moyens de coupe après leur actionnement.

6. Dispositif selon la revendication 1, **caractérisé en ce que** les moyens de coupe comprennent un fil tendu, une lame à pointes multiples ou un laser.

7. Dispositif selon l'une des revendications qui précèdent, **caractérisé en ce que** les moyens d'entraînement sont aptes à être bloqués pour immobiliser le tronçon de complexe lors de l'actionnement des moyens de coupe (550).

8. Procédé de réalisation d'ensembles de stockage d'énergie électrique, comprenant les étapes d'entraînement d'un film complexe (10, 20, 30, 40, 50, 60), d'enroulement du film complexe (10, 20, 30, 40, 50, 60), de tension du film complexe (10, 20, 30, 40, 50, 60) sur un tronçon et de coupe à l'aide de moyens de coupe (550) mobiles apte à être actionnés séquentiellement pour venir effectuer une coupe en l'air du film complexe au niveau du tronçon tendu, **caracterisé en ce que** lesdits moyens pour tendre le film complexe comprennent un rouleau (570) sur lequel le film complexe (10, 20, 30, 40, 50, 60) vient en appui, le rouleau (570) étant disposé entre les moyens de coupe (550) et les moyens d'enroulement (610) du film complexe, sur la trajectoire du film.

## Patentansprüche

1. Vorrichtung zur Bildung von Gruppen zum Speichern von elektrischer Energie, die Antriebsmittel einer komplexen Folie, Aufwickelmittel (610) der komplexen Folie (10, 20, 30, 40, 50, 60), Spannmittel (532, 534, 570, 610) der komplexen Folie über einen Abschnitt und bewegbare Schneidemittel (550), die sequentiell betätigbar sind, um die komplexe Folie (10, 20, 30, 40, 50, 60) im Bereich des gespannten Abschnitts in der Luft zu schneiden, umfasst, **dadurch gekennzeichnet, dass** die Spannmittel der komplexen Folie eine Walze (570) umfassen, auf der sich die komplexe Folie (10, 20, 30, 40, 50, 60) abstützt, wobei die Walze (570) zwischen den Schneidemitteln (550) und den Aufwickelmitteln (610) der komplexen Folie auf der Bahn der Folie angeordnet ist.

2. Vorrichtung nach Anspruch 1, **dadurch gekennzeichnet, dass** die Schneidemittel (550) eine Klinge (552) umfassen, die einen scharfen Rand (554) umfasst, der von einem konvexen Dieder mit zwei symmetrischen Neigungen gebildet ist.

3. Vorrichtung nach einem der vorangehenden Ansprüche, **dadurch gekennzeichnet, dass** sie Betätigungsmittel der Schneidemittel (550) umfasst, wobei diese Betätigungsmittel (556) einen linearen Aktuator umfassen, der imstande ist, den Schnitt der Folie in weniger als 0,2 Sekunden auszulösen.

4. Vorrichtung nach Anspruch 3, **dadurch gekennzeichnet, dass** der lineare Aktuator ein Pneumatikzylinder ist, der einen Verteiler direkt neben dem Zylinder aufweist.

5. Vorrichtung nach einem der Ansprüche 3 oder 4, **dadurch gekennzeichnet, dass** die Betätigungsmittel Rückstellmittel aufweisen, um die Schneidemittel nach ihrer Betätigung zurückzustellen.

6. Vorrichtung nach Anspruch 1, **dadurch gekennzeichnet, dass** die Schneidemittel einen gespannten Faden, eine Klinge mit mehreren Spitzen oder einen Laser umfassen.

7. Vorrichtung nach einem der vorangehenden Ansprüche, **dadurch gekennzeichnet, dass** die Antriebsmittel blockierbar sind, um den Komplexabschnitt bei der Betätigung der Schneidemittel (550) ruhigzustellen.

8. Verfahren zur Bildung von Gruppen zum Speichern von elektrischer Energie, das die Schritte Antreiben einer komplexen Folie (10, 20, 30, 40, 50, 60), Aufwickeln der komplexen Folie (10, 20, 30, 40, 50, 60), Spannen der komplexen Folie (10, 20, 30, 40, 50, 60) über einen Abschnitt und Schneiden mit Hilfe von bewegbaren Schneidemitteln (550), die sequentiell betätigbar sind, um die komplexe Folie im Bereich des gespannten Abschnitts in der Luft zu schneiden, umfasst, **dadurch gekennzeichnet, dass** die Spannmittel der komplexen Folie eine Walze (570) umfassen, auf der sich die komplexe Folie (10, 20, 30, 40, 50, 60) abstützt, wobei die Walze (570) zwischen den Schneidemitteln (550) und den Aufwickelmitteln (610) der komplexen Folie auf der Bahn der Folie angeordnet ist.

## Claims

1. A device for producing assemblies for storing electric energy, comprising driving means for a complex film, means (610) for winding the complex film (10, 20, 30, 40, 50, 60), means (532, 534, 570, 610) for tensioning the complex film on a section and movable cutting means (550) able to be sequentially actuated so as to carry out a cut in air of the complex film (10, 20, 30, 40, 50, 60) at the tensioned section, **characterized in that** said means for tensioning the complex film comprise a roller (570) upon which the complex film (10, 20, 30, 40, 50, 60) comes to bear, the roller (570) being positioned between the cutting means (550) and the means (610) for winding the complex film, on the trajectory of the film.

2. The device according to claim 1, **characterized in that** the cutting means (550) comprise a blade (552) comprising a sharp edge (554) formed by a convex dihedron with two symmetrical slopes.

3. The device according to one of the preceding claims, **characterized in that** it comprises means for actuating the cutting means (550), these actuation means (556) comprising a linear actuator able to trigger the cutting of the film in less than 0.2 seconds.

4. The device according to claim 3, **characterized in that** the linear actuator is an air cylinder having a distributor directly juxtaposed to the cylinder.

5. The device according to one of claims 3 or 4, **characterized in that** the actuation means comprise a return means for returning the cutting means after their actuation.

6. The device according to claim 1, **characterized in that** the cutting means comprise a tensioned wire, a blade with multiple tips or a laser.

7. The device according to one of the preceding claims, **characterized in that** the driving means are able to be blocked in order to immobilize the complex section upon actuation of the cutting means (550).

8. A method for producing electric energy storage assemblies, comprising the steps for driving a complex film (10, 20, 30, 40, 50, 60), for winding the complex film (10, 20, 30, 40, 50, 60), for tensioning the complex film (10, 20, 30, 40, 50, 60), on a section and for cutting it by means of movable cutting means (550) able to be actuated sequentially so as to carry out a cut in air of the complex film at the tensioned section, **characterized in that** said means for tensioning the complex film comprise a roller (570) upon which the complex film (10, 20, 30, 40, 50, 60) comes to bear, the roller (570) being positioned between the cutting means (550) and the means (610) for winding the complex film, on the trajectory of the film.

FIG_1

FIG.2

FIG.3

EPO -DG 1

1 1. 07. 2005

116

FIG.4

FIG.5

FIG.6

FIG.22

FIG_7

EP 1 590 850 B1

FIG.8

FIG.31

FIG.9

90

81
50
60
80

FIG.10

50
60
80

FIG.11

40

FIG.12

94

85
40
84

FIG.13

92

83
10
20
30
82

FIG.14

83
10
20
30

FIG.15

96

83
10
20
30
40
50
60
80

FIG.16

10
20
30
40
50
60

FIG_17

FIG_18

FIG_19

FIG_20

## FIG.21

FIG. 23

96  526  528

520  529

524

FIG. 24

521

P1  L1

-96-

96  521

FIG. 25

523

96  521  525

FIG. 26

522

24

EP 1 590 850 B1

Vitesse de
rotation
Tr/s

Courbes variation de vitesse mandrin 1$^{er}$ tour à 6m/mn

# FIG_27

0°

8°

0°

20°

30°  40°  58° 64°  80°  100° 116° 120°  140°  150°

84°

175°

185°

188°

190°

165°

200° 210° 220°  238° 64°  260°  280° 116° 300°  320°  330°

360°

355°

345°

Temps en
seconde

PA

PA

FIG.28

EP 1 590 850 B1

Vitesse de rotation Tr/s — Courbes variation de vitesse mandrin garni ép=5,5mm (19$^{eme}$ tour dans l'exemple)

Temps en seconde

PA   PA

EP 1 590 850 B1

## FIG.29

## FIG.30

| Angle en ° | | Rayon enroulement | Facteur de correction | 1er Tour | | 2nd tour | | ... | 10e Tour | | ... | 23e Tour | |
|---|---|---|---|---|---|---|---|---|---|---|---|---|---|
| | | | | r | N | r | N | | r | N | | r | N |
| 0 | 180 | 5,00 | 1,109980 | 5,22 | 182,87 | 5,44 | 175,41 | | 7,22 | 132,26 | | 10,11 | 94,49 |
| 1 | 181 | 5,06 | 1,200700 | 5,30 | 180,17 | 5,54 | 172,36 | | 7,46 | 127,98 | | 10,58 | 90,23 |
| 2 | 182 | 5,24 | 1,319033 | 5,50 | 173,50 | 5,77 | 165,57 | | 7,88 | 121,21 | | 11,31 | 84,45 |
| 3 | 183 | 5,57 | 1,483629 | 5,87 | 162,77 | 6,16 | 154,93 | | 8,54 | 111,85 | | 12,39 | 77,04 |
| ... | ... | | | | | | ... | | | | | | |
| 80 | 260 | 54,30 | 0,796343 | 54,46 | 17,53 | 54,62 | 17,48 | | 55,89 | 17,09 | | 57,96 | 16,47 |
| 85 | 265 | 52,82 | 0,774575 | 52,97 | 18,03 | 53,13 | 17,97 | | 54,37 | 17,56 | | 56,38 | 16,94 |
| ... | ... | | | | | | ... | | | | | | |
| 178 | 358 | 5,19 | 0,977600 | 5,39 | 177,31 | 5,58 | 171,10 | | 7,15 | 133,65 | | 9,69 | 98,58 |
| 179 | 359 | 5,05 | 1,037420 | 5,26 | 181,63 | 5,46 | 174,74 | | 7,12 | 134,03 | | 9,82 | 97,22 |
| 180 | 360 | 5,00 | 1,109980 | 5,22 | 182,87 | 5,44 | 175,41 | | 7,22 | 132,26 | | 10,11 | 94,49 |

EP 1 590 850 B1

## FIG. 32

81, 82, 84, 85, 80, 83

230

232

90, 92, 94, 96

**100**

COMPLEXE 2C 90

DEROULAGE EN FREIN + ALIGNEMENT

**200**

LITHIUM 40
DEROULAGE EN FREIN
ADJONCTION DE 2 PELLICULES
84, 85

262

ENTRAIN.ᵗ
ESCLAVE
264

ALIGNEMENT

**300**

COMPLEXE 3C 92

DEROULAGE EN FREIN + ALIGNEMENT

81

DEPELLICULAGE
122

274

COUPE
272

84

85

82

DEPELLICULAGE
322

DEPELLICULAGE

DEPELLICULAGE

FOUR

FOUR

130

330

410

400

ESCLAVE DE 532 ET
MAITRE DE 264

SYNCHRONISATEUR 510

534

532

+    +    FREIN + MAITRE DE 400

DEPELLICULAGE 80

DEPELLICULAGE 83

COUPE

570

552

610

**FIG_33**

ENROULEUR VITESSE CO-PILOTEE
PAR POSITION ANGULAIRE

DEGARNISSAGE

700

PRESSAGE A PLAT

MISE EN CHARGEUR

EVACUATION DU CHARGEUR

FIG. 34

## RÉFÉRENCES CITÉES DANS LA DESCRIPTION

**Documents brevets cités dans la description**

- FR 2737339 A
- FR 2759087 A
- FR 2759211 A
- FR 2808622 A
- EP 1249884 A
- US 4003112 A